(19) Europäisches Patentamt
European Patent Office
Office européen des brevets

(11) **EP 3 226 185 A1**

(12) **EUROPEAN PATENT APPLICATION**

(43) Date of publication:
**04.10.2017 Bulletin 2017/40**

(51) Int Cl.:
***G06Q 10/06*** *(2012.01)*

(21) Application number: **17160073.7**

(22) Date of filing: **09.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2016 JP 2016071057**

(71) Applicant: **FUJITSU LIMITED**
**Nakahara-ku**
**Kawasaki-shi**
**Kanagawa 211-8588 (JP)**

(72) Inventor: **Ito, Fumito**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **SEARCH PROGRAM, SEARCH METHOD, AND INFORMATION PROCESSING APPARATUS**

(57) A computer performing a travel plan search is disclosed. In the travel plan search, a term corresponding to an entered keyword is specified by referring to a first storage part which stores a correspondence relationship between keywords and terms, in response to receiving a search request based on the entered keyword. A region, for which a period corresponding to the specified term is recorded as an observation period, is specified by referring to a second storage part which stores the observation period of living things for each of regions. The travel plan corresponding to the specified term or the keyword, and the specified region, is specified by referring to a third storage part which stores the travel plan corresponding to the regions, and periods or keywords respectively. The specified travel plan is output.

FIG.1

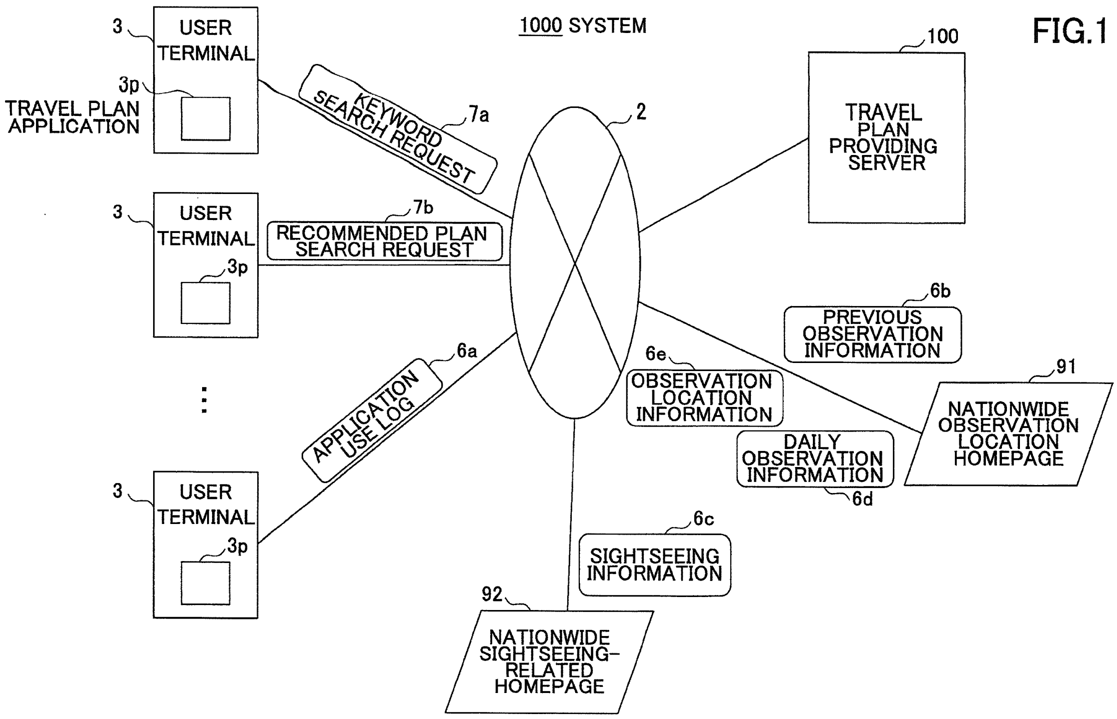


EP 3 226 185 A1

## Description

FIELD

The embodiments discussed herein are related to a search program, a search method, and an information processing apparatus.

BACKGROUND

Recently, through the Internet, a travel plan has been provided by preference of a customer recorded beforehand or by a keyword search pertinent to the preference.

There are various known search technologies pertinent to travel. In one technology, a best season is determined for an item in response to an input of that item related to a certain season. In another technology, by collecting information concerning a sightseeing place provided in the Internet and associating the information with a sightseeing place name, the sightseeing place is searched for by using a search condition indicated by a request of travel information.

[Patent Documents]

Japanese Laid-open Patent Publication No. 2002-304398
Japanese Laid-open Patent Publication No. 2010-39710
Japanese Laid-open Patent Publication No. 2011-65633
Japanese Laid-open Patent Publication No. 2015-18545

SUMMARY

Accordingly, it is an object in one aspect of the embodiment to provide a travel plan suitable for a place and a season.

According to one aspect of the embodiments, there is provided a travel plan search program that causes a computer to execute a process including: specifying a term corresponding to an entered keyword by referring to a first storage part which stores correspondence relationships between keywords and terms, in response to receiving a search request including the entered keyword; specifying a region, for which a period corresponding to the specified term is recorded as an observation period, by referring to a second storage part which stores observation period of living things for each of regions; specifying a travel plan corresponding to a combination of the specified term or the keyword, and the specified region, by referring to a third storage part which stores travel plans corresponding to the regions, and periods or keywords respectively; and outputting the specified travel plan.

BRIEF DESCRIPTION OF DRAWINGS

FIG. 1 is a diagram illustrating a system configuration example in an embodiment;
FIG. 2 is a diagram illustrating a hardware configuration of a travel plan providing server;
FIG. 3 is a diagram illustrating a functional configuration example of a travel plan providing server in the embodiment;
FIG. 4 is a diagram illustrating a data configuration example of a travel plan table;
FIG. 5 is a diagram illustrating a data configuration example of a route history table;
FIG. 6 is a diagram illustrating a data structure example of a phenological observation item master;
FIG. 7 is a diagram illustrating a data structure example of an event season master and an event keyword master;
FIG. 8 is a diagram illustrating an example representing a part of an administrative division graph model;
FIG. 9 is a diagram illustrating a data example of a phenological observation information table;
FIG. 10 is a diagram illustrating data structure examples of a route table and a route history table;
FIG. 11 is a diagram illustrating a data configuration example of a phenological front table;
FIG. 12 is a diagram illustrating a data configuration example of a route master table;
FIG. 13 is a diagram illustrating a data configuration example of a relation table;
FIG. 14 is a flowchart for explaining a log collection process conducted by a log collection part;
FIG. 15 is a flowchart for explaining an observed value batch acquisition process conducted by an observed value batch acquisition part;

FIG. 16 is a flowchart for explaining a tourist information extraction process conducted by a tourist information extraction part;
FIG. 17 is a flowchart for explaining a daily observation value acquisition process conducted by a daily observation value acquisition part;
FIG. 18 is a flowchart for explaining an observation location association process conducted by an observation location association part;
FIG. 19 is a diagram for explaining an entire first seasonal travel search process;
FIG. 20 is a flowchart for explaining a first seasonal travel search process conducted by a first seasonal travel search part;
FIG. 21 is a diagram for explaining the entire second seasonal travel search process; and
FIG. 22 is a flowchart for explaining a second seasonal travel search process conducted by a second seasonal travel search part.

DESCRIPTION OF EMBODIMENTS

Generally, people travel for a special product, a festival, an outdoor activity, or the like as a purpose. In a case of searching a travel plan using a seasonal event as a keyword, a travel plan is mostly recommended based on a popularity ranking.
However, there is a difference of time when a season has come among regions for each of seasons. When actually traveling based on the popularity ranking, the season at a traveled location may not be a best season for an event desired by the traveler.
In the following, preferred embodiments of the present invention will be described with reference to the accompanying drawings.
FIG. 1 is a diagram illustrating a system configuration example in the embodiment. In FIG. 1, a system 1000 includes multiple user terminals 3, a nationwide observation location homepage 91, a nationwide sightseeing-related homepage 92, and a travel plan providing server 100. The multiple user terminals 3, the nationwide observation location homepage 91, the nationwide sightseeing-related homepage 92, and the travel plan providing server 100 are connected via a network 2.
The multiple user terminals 3 are information processing terminals of users planning a trip or the like, and may be a mobile phone or the like having a browser function.
The nationwide observation location homepage 91 is generically called for multiple Web pages, which provide observation information of plant seasons and animal seasons at each of observation locations by Japan Meteorological Agency. By the nationwide observation location homepage 91, the observation information for approximately 50 years is provided. Observation dates when an observation was conducted for each of observation items at each of observation locations, weather information, and the like are published.
The nationwide sightseeing-related homepage 92 is generically called for multiple Web pages, which introduce sightseeing spots, specialties, and the like published by municipalities and the like. The nationwide sightseeing-related homepage 92 presents regional unique attractions such as the sightseeing spots, food culture, and the like.
The travel plan providing server 100 collects various information items from the nationwide observation location homepage 91 and the nationwide sightseeing-related homepage 92, uses the collected various information items, and provides, to the user terminal 3, information of a plan to travel at a most appropriate time (best time in season) for an item desired by a user of the user terminal 3 in response to a keyword search request 7a or a recommended plan search request 7b from the user terminal 3.
The keyword search request 7a is regarded as a search request of a travel plan by a keyword entered by the user to the user terminal 3. As the keyword, "crab", "skiing", "plum", "Kyoto", or the like may be entered. In the embodiment, the travel plan providing server 100 displays a combination of the best time and the most suitable sightseeing place to visit at the best time, based on a current weather situation as a search result at the user terminal 3. The best time and the most suitable sightseeing place may be related to a food specified by entering as keyword.
The recommended plan search request 7b is regarded as the search request automatically conducted by an access of the user from the user terminal 3 to a homepage of the travel plan providing server 100. In response to the access to the homepage of the travel plan providing server 100, the travel plan providing server 100 displays the combination of the best time and the most suitable sightseeing place to visit at the best time, based on the current weather situation as the search result at the user terminal 3.
The travel plan providing server 100 downloads a travel plan application 3p to the user terminal 3 in response to a request of the user terminal 3, collects, from the user terminal 3, an application use log 6a pertinent to the travel plan application 3p used at the user terminal 3, and acquires information of interest and idea of the user from the collected application use log 6a.
The travel plan providing server 100 in the embodiment includes a hardware configuration as illustrated in FIG.

2. FIG. 2 is a diagram illustrating the hardware configuration of the travel plan providing server. In FIG. 2, the travel plan providing server 100 corresponds to an information processing apparatus controlled by a computer, and includes a CPU (Central Processing Unit) 11, a main device 12, an auxiliary storage device 13, an input device 14, a display device 15, a communication InterFace (I/F) 17, and a drive device 18, which are mutually connected via a bus B. The main device 12 and the auxiliary storage device 13 correspond to a storage part 130.

The CPU 11 corresponds to a processor that controls the travel plan providing server 100 in accordance with a program stored in the main storage device 12. As the main storage device 12, a Random Access Memory (RAM), a Read Only Memory (ROM) and/or the like is used. The main storage device 12 stores or temporarily stores the program to be executed by the CPU 11, data used in a process by the CPU 11, data acquired in the process by the CPU 11, and the like.

A Hard Disk Drive (HDD) or the like is used as the auxiliary storage device 13. The auxiliary storage device 13 stores data such as the program for the CPU 11 to perform various processes. A part of the program stored in the auxiliary storage device 13 is loaded to the main storage device 12 and executed by the CPU 11, so as to realize the various processes.

The input device 14 includes a mouse, a keyboard, and the like, and is used for the user to input various information items for the process of the travel plan providing server 100. The display device 15 displays various information items under control of the CPU 11. The input device 14 and the display device 15 may be a user interface integrated such as a touch panel or the like.

The communication I/F 17 conducts a wired or wireless communication through the network 2. However, the communication conducted by the communication I/F 17 is not limited to the wired or wireless communication. Communications through the network 2 may include the Internet.

The program for realizing the process conducted by the travel plan providing server 100 may be provided to the travel plan providing server 100 by a recording medium 19 such as a CD-ROM (Compact Disc Read-Only Memory) or the like.

The drive device 18 interfaces between the recording medium 19 (which may be the CD-ROM or the like) set in the drive device 18 and the travel plan providing server 100.

Also, the program for realizing various processes according to the embodiment described below is stored in the recording medium 19, and the program stored in the recording medium 19 is installed into the travel plan providing server 100. The installed program becomes executable for the travel plan providing server 100.

The recording medium 19 storing the program is not limited to the CD-ROM. The recording medium 19 may be any type of a recording medium, which is a non-transitory tangible computer-readable medium including a data structure. The recording medium 19 may be a portable recording medium such as a Digital Versatile Disc (DVD), a Universal Serial Bus (USB) memory, or the like, or a semiconductor memory such as a flash memory, as well as the CD-ROM.

FIG. 3 is a diagram illustrating a functional configuration example of the travel plan providing server in the embodiment. In FIG. 3, the travel plan providing server 100 mainly includes a pre-process part 40a and a search process part 40b.

The storage part 130 stores a travel plan table 51, a route history table 52, a phenological observation item master 53, an event season master 54, an event keyword master 55, an administrative division graph model 56, a phenological observation information table 57, a route table 58, a phenological front table 59, a route master 60, a relation master 61, a user interest and idea table 69, and the like.

The pre-process part 40a collects various data sets to refer to when providing travel plans in response to the keyword search request 7a and the recommended plan search request 7b received from the user terminal 3, and stores corrected data in the storage part 130.

The pre-process part 40a includes a log collection part 41, an observed value batch acquisition part 42, a sightseeing information extraction part 43, a daily observation value acquisition part 44, and an observation location association part 45. The log collection part 41, the observed value 42, the sightseeing information extraction part 43, the daily observation value acquisition part 44, and the observation location association part 45 are realized by the CPU 11 executing corresponding programs.

The log collection part 41 collects the application use log 6a from the user terminal 3 in response to use of the travel plan application 3p at the user terminal 3, and stores the application use log 6a in the travel plan table 51. The application use log 6a includes information pertinent to the travel plan such as a plan name of a trip, an event, a region, and the like.

The observed value batch acquisition part 42 connects to the nationwide observation location homepage 91, and collectively acquires previous observation information 6b of last 10 years or the like from homepages of observation locations in a whole country. The observation items and various sets of item related information of the observation items are extracted from the previous observation information 6b, and are stored in the route history table 52 and the phenological observation item master 53.

The observation item indicates an observation target. As an example of the observation target, a name, which specifies a living thing symbolizing the season such as a camellia, a hydrangea, a nightingale, or the like, is indicated by the observation item. Various sets of the item related information indicate a phenomenon caused the living thing, the season defined by the phenomenon of the living thing, passing days for which the phenomenon of the living thing has been traveling between adjacent regions every year, and the like.

The sightseeing information extraction part 43 connects to the nationwide sightseeing-related homepage 92 every day, and acquires sightseeing information 6c from various homepages of sightseeing places. The event at each of the sightseeing places and various sets of event related information are extracted from the sightseeing information 6c, and stored in the event season master 54 and the event keyword master 55.

The event indicates one of the special product such as the crab, a strawberry, or the like, the event such as the festival, and the outdoor activity such as skiing, golf, camping, or the like. The event related information indicates a best season for the event, the keyword for a search of the event, or the like.

The daily observation value acquisition part 44 corresponds to a daily batch, acquires daily observation information 6d of each of the observation locations from the nationwide observation location homepage 91 every day, and stores the route table 58 and the phenological front table 59. Also, the daily observation value acquisition part 44 specifies to which previous year a change of a current season is similar, by calculating a cosine similarity.

The observation location association part 45 acquires an observation location information 6e by connecting to the nationwide observation location homepage 91, regards a part (prefecture) of an address of the observation location as a node, specifies a relation pertinent to all patterns of routes, and adjacent nodes of a departure and an arrival in each of the routes, and stores the specified relation to the route master 60 and the relation master 61.

The search process part 40b searches for information of a plan to travel to a suitable sightseeing place at the best time (in season) for a desired matter of the user of the user terminal 3 in response to the keyword search request 7a or the recommended plan search request 7b sent from the user terminal 3, and provides a search result to the user terminal 3.

The search process part 40b specifies the season by referring to the event season master 54 and the event keyword master 55, specifies a region in the specified season by referring to the phenological front table 59, and searches travel plan information pertinent to the specified region from the travel plan table 51.

Accordingly, travel plan candidates for sightseeing the region at the best time in the season are listed and displayed at the user terminal 3. Hence, a list of the travel plan candidates in the embodiment does not always correspond to a list of popular tourist spots.

The search process part 40b includes a first seasonal travel search part 46 and a second seasonal travel search part 47.

The first seasonal travel search part 46 searches the travel plan for visiting the sightseeing place at the best time in the season based on words indicated by the keyword search request 7a. The first seasonal travel search part 46 specifies the season to be the best time for the event indicated by the keyword search request 7a, and searches the travel plan to visit the sightseeing place at the best time in the specified season. One or multiple retrieved travel plans are listed as the travel plan candidates, and displayed at the user terminal 3.

The second seasonal travel search part 47 searches the travel plan to visit the sightseeing place at the best time in the season by using the keyword acquired based on information specifying the user terminal 3 or the user from the user interest and idea table 69 in response to the recommended plan search request 7b. One or multiple travel plans are displayed at the user terminal 3 by the search result listing those as the travel plan candidates. The user interest and idea table 69 is regarded as a table storing keywords, which the user previously used for the search, by corresponding to information for identifying the user.

Next, a data configuration example of various tables and masters (master databases) in the embodiment will be described with reference to FIG. 4 through FIG. 13.

FIG. 4 is a diagram illustrating a data configuration example of the travel plan table. In FIG. 4, the travel plan table 51 is regarded as a table, which indicates the event as a travel purpose and the region to travel for each of previously created travel plans. The travel plan table 51 includes items of "PLAN NAME", "EVENT", "REGION", and the like.

The item "PLAN NAME" indicates a name of the travel plan, which the user previously created. The item "EVENT" corresponds to a main purpose to travel. The item "REGION" indicates a name of the prefecture, a municipality, or the like.

In this data example, the travel plan specified by the plan name "STREAM FISHING TOUR AT CENTRAL HOKKAIDO" is a plan to travel to "HOKKAIDO" indicated by the region for the event "STREAM FISHING" as the travel purpose. The travel plan specified by the plan name "CHERRY-BLOSSOM VIEWING TOUR IN FUKUOKA" is a plan to travel "FUKUOKA" indicated by the region for the event "CHERRY-BLOSSOM VIEWING" as the travel purpose.

Also, the travel plan specified by the plan name "FULL-OF-CRABS TOUR IN HOKKAIDO" is a plan to travel to "HOKKAIDO" indicated by the region for the event "CRAB" as the travel purpose. The travel plan specified by the plan name "CRAB TOUR IN WAKKNAI" is a plan to travel to "WAKKNAI" indicated by the region for the event "CRAB" as the travel purpose.

FIG. 5 is a diagram illustrating a data configuration example of the route history table. In FIG. 5, the route history table 52 is regarded as a table, which records days from a first observation at a certain node to the first observation at a next node for an observation target in a certain year for each of relations among the nodes, for each of the routes defined beforehand. The route history table 52 includes items of "ROUTE ID", "OBSERVATION ITEM", "YEAR", "RELATION 1 - PASSING DAYS", "RELATION 2 - PASSING DAYS", and the like.

The item "ROUTE ID" indicates the route ID registered in a route master table 70. The item "OBSERVATION ITEM" indicates a target to observe (hereinafter, called "observation target"). The item "YEAR" indicates a year when the observation is conducted. The item "RELATION 1 - PASSING DAYS", the item "RELATION 2 - PASSING DAYS", and the like indicate a number of days as the passing days until the observation target is confirmed at the next node every time the observation target has been confirmed at a current node in an order of nodes indicated by records having the same route ID in the route master table 70.

In this data example, in the route specified by the route ID "XXXXX", at the year "1980" when the observation target "CAMELLIA" was observed, "RELATION 1 - PASSING DAYS" was "ONE DAY", and "RELATION 2 - PASSING DAYS" was "THREE DAYS".

In the route ID "XXXXX", in a case in which the departure "HYOGO" and the arrival "KYOTO" are defined for the relation 1, the relation 1 - passing days "ONE DAY" represents that the camellia's blooming was first observed at the arrival "KYOTO" one day after first being observed at the departure "HYOGO". In a case in which the departure "KYOTO" and the arrival "NARA" are defined for the relation 2, the relation 2 - passing days "THREE DAYS" represents that the camellia's blooming was first observed at the arrival "NARA" three days after first being observed at the departure "KYOTO".

FIG. 6 is a diagram illustrating a data structure example of the phenological observation item master. In FIG. 6, the phenological observation item master 53 maintains information acquired from the nationwide observation location homepage 91, and includes items of "OBSERVATION ITEM", "PHENOMENON", "SEASON", and the like.

The item "OBSERVATION ITEM" indicates the observation target. The item "PHENOMENON" indicates the phenomenon to determine that the observation target has been confirmed. The item "SEASON" indicates one or more seasons: "spring", "summer", "autumn", and "winter". In the embodiment, any one of the seasons is specified based on the day capable of confirming the observation target representing the season.

In this data example, when it is confirmed that the observation item "CAMELLIA" has "BLOOMED", it is determined that the season of the observed day is winter. Depending on the region, the day when the observation item "CAMELLIA" has "BLOOMED" is different. Accordingly, the day when it is confirmed that "winter" has come is different. Whether or not the region is in winter is determined by whether or not "CAMELLIA" has "BLOOMED" after autumn is confirmed.

Also, when it is confirmed that the observation item "HYDRANGEA" has "BLOOMED", it is determined that the season of the day is "summer". In the same manner, when "FIRST SINGING" of the observation item "NIGHTINGALE" is confirmed, it is defined that the season of the day is "summer". That is, by predicting a confirmation date of the phenomenon of the observation item, it is possible to specify the appropriate season for each of the regions.

FIG. 7 is a diagram illustrating a data structure example of the event season master and the event keyword master. In FIG. 7, data of the event season master 54 and the event keyword master 55 are created and updated by periodically analyzing the nationwide sightseeing-related homepage 92.

The event season master 54 is regarded as a table indicating one or more seasons by corresponding to each of the events, and includes items of "EVENT", and "SEASON". The item "EVENT" indicates a name possible to specify either one of the events such as the special product, an entertainment, the outdoor activity, and the like. The item "SEASON" indicates one or more seasons being the best time for the event: "spring", "summer", "autumn", and "winter".

The event keyword master 55 is regarded as a table recording various keywords by corresponding to each of the events, and includes items of "EVENT", "KEYWORD 1", "KEYWORD 2", and the like. As described above, the event keyword master 55 is associated with the event season master 54 by a value of "EVENT". "KEYWORD 1", "KEYWORD 2", and the like indicate words used in association with the event.

The event is specified by "KEYWORD 1", "KEYWORD 2", and the like, and the season is specified by referring to the event season master 54 by the specified event.

In this data example, when a hair crab is indicated by the keyword search request 7a, the event "crab" is specified by referring to the event keyword master 55, and the season is determined as winter by referring to the event season master 54 by the specified event "crab"

FIG. 8 is a diagram illustrating an example representing a part of the administrative division graph model. In the part of the administrative division graph model 56 in FIG. 8, each of prefectures is represented by a node, and geographically adjacent nodes are linked.

In this example, the node "HOKKAIDO" is linked to the node "AKITA", the node "AOMORI", and the node "IWATE". Then, the node "AKITA" is linked to the node "YAMAGATA" and the node "AOMORI". Moreover, the node "AOMORI" is linked to the node "IWATE". For other prefectures, two adjacent nodes are linked to each other in the same manner. The relation represents a link between the nodes.

In the administrative division graph model 56, the link between two nodes may be indicated by a correspondence of two prefecture names.

FIG. 9 is a diagram illustrating a data example of the phenological observation information table. In FIG. 9, the phenological observation information table 57 is regarded as a table that records the observation items and the phenomena extracted from the nationwide observation location homepage 91. The phenological observation information table 57 includes items of "REGION", "OBSERVATION ITEM", "PHENOMENON", and the like.

The item "REGION" indicates the prefecture where the observation location, which is published in the nationwide observation location homepage 91, resides. The item "OBSERVATION ITEM" indicates the observation items extracted from the nationwide observation location homepage 91. The item "PHENOMENON" indicates the phenomenon of the observation item to confirm.

In this data example, in the region "HOKKAIDO", it is confirmed as the phenomenon that the observation item "CAMELLIA" has "BLOOMED". In the region "NARA", it is confirmed as the phenomenon that the observation item "HYDRANGEA" has "BLOOMED". In the region "OSAKA", it is confirmed as the phenomenon that the observation item "FIRST SINGING" of the observation item "NIGHTINGALE" is confirmed.

FIG. 10 is a diagram illustrating data structure examples of the route table and the route history table. In FIG. 10, the route table 58 is regarded as a table that records the passing days this year based on the relation between the nodes, and includes items of "ROUTE ID", "OBSERVATION ITEM", "RELATION 1", "RELATION 2", and the like.

The item "ROUTE ID" indicates an identification for specifying the route defined by using the administrative division graph model 56. The item "OBSERVATION ITEM" indicates the observation item registered in the phenological observation item master 53. The item "RELATION 1", "RELATION 2", and the like indicate passing days for each of the relations among the nodes in the route.

In this data example, for the route ID "XXXXX", regarding the observation item "camellia", it is recorded that the passing day of the relation 1 was "1 day", and the passing days of the relation 2 were "3 days". For other observation items of the same route ID, the passing days are indicated for each of the observation items in the same manner. Also, for other route IDs, the passing days are indicated for each of the observation items in the same manner.

The route history table 52 is regarded as a table that records the passing days for the last several years or the last few decades for each of the routes, and includes items of "ROUTE ID", "OBSERVATION ITEM", "YEAR", "RELATION 1", "RELATION 2", and the like.

The item "ROUTE ID" indicates the identification for specifying the route defined by using the administrative division graph model 56. The item "OBSERVATION ITEM" indicates the observation item registered in the phenological observation item master 53. The item "YEAR" indicates an observed year. The items "RELATION 1", "RELATION 2", and the like indicate the passing days for each of the relations among the nodes of the route.

In this data example, for the route ID "XXXXX", regarding the observation item "camellia", in "1980", the passing day of the relation 1 was "1 day", and the passing days of the relation 2 were "3 days". For the same route ID "XXXXX", regarding the observation item "camellia", in "1981", the passing day of the relation 1 was "1 day", and the passing day of the relation 2 was "1 day".

In the embodiment, in years of records specified by the route ID and the observation item of the route history table 52, a year, in which a tendency of the relation 1, relation 2, ... is the most similar to that of relation 1, relation 2, ... of the record specified based on the route ID and the observation item of the route table 58, is specified. The cosine similarity is calculated, and a record having a highest value is selected.

In this data example, an observation trend of the observation item "camellia" of this year is closest to that of year "1980". By referring to the observation trend related to four seasons of the year "1980", it is possible to predict each advent of the four seasons in this year.

FIG. 11 is a diagram illustrating a data configuration example of the phenological front table. In FIG. 11, the phenological front table 59 is regarded as a table indicating a current likelihood for each of seasons in each of the regions, and includes items of "REGION", "SEASON", "DEGREE", and the like.

The item "REGION" indicates the prefecture. The item "SEASON" indicates either one of "spring", "summer", "autumn", and "winter". The item "DEGREE" indicates a likelihood as the current season based on the observation state of biological seasons. The degree "100" indicates a most likely to be that season, and the degree "0" indicates a most likely not to be that season.

In this data example, the degree "56" indicates the likelihood for the region "Hokkaido" to be in the season "spring". It may be determined that Hokkaido is not in the "spring". However, the degree "100" indicates for the region "Hokkaido" to be in the season "winter". Accordingly, it may be determined that Hokkaido is in the "winter". Also, the degree is "0" for the likelihood to be the "summer". Hence, it may be determined that Hokkaido is not in the "summer". Similarly, for another season, and for other regions, the likelihood of each of seasons may be indicated. In response to an update of the route table 58, the phenological front table 59 is also updated.

FIG. 12 is a diagram illustrating a data configuration example of the route master table. In FIG. 12, the route master table 60 is regarded as a table that registers a route indicating an order, in which the phenomenon of the observation item was actually observed in the past, based on the relations of the administrative division graph model 56, and includes the items of "ROUTE ID", "PREFECTURE 1", "PREFECTURE 2", "PREFECTURE 3", "PREFECTURE 4", ... , and the like.

The item "ROUTE ID" indicates the identification for specifying the route defined by using the administrative division graph model 56. Each of the items of "PREFECTURE 1", "PREFECTURE 2", "PREFECTURE 3", "PREFECTURE 4", ... and the like indicates the next prefecture selected based on the relations.

In this data example, for the route ID "XXXXX", from the prefecture 1 to a prefecture 3, the order of the observation of the phenomenon for the observation item is defined as "Hokkaido" -> "Aomori" -> "Iwage". For the route ID "YYYYY", from the prefecture 1 to the prefecture 4, the order of the observation of the phenomenon for the observation item is defined as "Hokkaido" -> "Aomori" -> "Akita" -> "Yamagata". Similarly, the order of the confirmation of the phenomenon for the observation item is defined for each of other route IDs.

FIG. 13 is a diagram illustrating a data configuration example of the relation table. In FIG. 13, the relation table 61 is regarded as a table that records the relations among adjacent nodes, as each of the prefectures is defined as the node, and includes items of "ROUTE ID", "RELATION ID", "PREFECTURE 1", "PREFECTURE 2", and the like.

The item "ROUTE ID" indicates the route ID, which has been registered in the route master table 60. The item "RELATION ID" indicates an identification for specifying a pair of the adjacent nodes on the route. The item "PREFECTURE 1" specifies one of the prefectures to be the departure and the item "PREFECTURE 2" specifies one of the prefectures to be the arrival.

By indicating the route ID and the relation ID, the prefecture 1 and the prefecture 2 are specified. That is, when the phenomenon of the observation item is confirmed in the prefecture 1 of a departure side, the prefecture 2 is determined as the location where the phenomenon is next observed.

In this data example, the relation 1 of the route ID "XXXXX" specifies that "Hokkaido" is the departure and "Aomori" is the arrival. The relation 2 of the route ID "XXXXX" specifies that "Aomori" is the departure and "Iwate" is the arrival. Other relations specify the departure and arrival in the same manner.

Next, the pre-process part 40a will be described with reference to FIG. 14 to FIG. 18. FIG. 14 is a flowchart for explaining a log collection process conducted by the log collection part.

In FIG. 14, the log collection part 41 receives the application use log 6a from each of the user terminals 3, which downloads the travel plan application 3p (step S4101). The log collection part 41 acquires information of the plan name, the event, and the region from received application use log 6a, and stores the information in the travel plan table 51 (step S4102). After that, the log collection part 41 terminates the log collection process.

FIG. 15 is a flowchart for explaining an observed value batch acquisition process conducted by the observed value batch acquisition part. In FIG. 15, the observed value batch acquisition part 42 accesses the nationwide observation location homepage 91, and collectively acquires previous sets of phenological information (step S4201).

The phenological information indicates all observation items, and years and dates when the phenomenon defined for each of the observation items wad obserbed.

The observed value batch acquisition part 42 refers to the administrative division graph model 56, and registers the order of passing nodes for each of years and each of the observation items, as the route in the route history table 52 (step S4202). Also, the observed value batch acquisition part 42 registers the observation items, which have been observed at the observation locations in the whole country, to the phenological observation item master 53 by associating the observation items with a representative season (step S4203). The observation items may be registered not to be duplicated in the phenological observation item master 53.

It is noted that a process order of steps S4202 and S4203 is not specified. Step S4202 may be conducted after step S4203.

FIG. 16 is a flowchart for explaining a tourist information extraction process conducted by the tourist information extraction part. In FIG. 16 the tourist information extraction process is conducted by a daily batch. The sightseeing information extraction part 43 accesses the nationwide sightseeing-related homepage 92, and collects the sightseeing information (step S4301).

The sightseeing information extraction part 43 extracts words from the collected sets of sightseeing information (step S4302), and analyzes relationships among the words(step S4303).

Next, the sightseeing information extraction part 43 extracts the words representing the events from the words related to the seasons based on an analysis result, and registers the extracted words in the event season master 54 by corresponding to the seasons for each of the events (step S4304). When the same event has been registered in the event season master 54, that event is not registered again.

Also, the sightseeing information extraction part 43 extracts a word strongly related to the event as a characteristic keyword among words other than the seasons, and stores the extracted keyword in the event keyword master 55 by associating with the event (step S4305). When the event does not exist in the event keyword master 55, a new record is added, and the event and the keyword are stored by associating with each other. When the event exists but the keyword does not exist, the keyword is added. When the event and the keyword exist, neither the event nor the word is registered in the event keyword master 55 so as not to be duplicated.

The process order of steps S4304 and S4305 is not specified. After step S4305, step S4304 is conducted.

FIG. 17 is a flowchart for explaining a daily observation value acquisition process conducted by the daily observation value acquisition part. In FIG. 17, the daily observation value acquisition process is conducted by the daily batch. The daily observation value acquisition part 44 acquires the phenological information of this year from the nationwide observation location homepage 91 (step S4401).

The daily observation value acquisition part 44 stores the observation item and the phenomenon by associating with each other in the phenological observation information table 57 for each of the regions (step S4402). Also, the daily observation value acquisition part 44 specifies the observation locations where the current date is set as the observation date for each of the observation items from the phenological information, and updates the route table 58 (step S4403).

Next, the daily observation value acquisition part 44 calculates the cosine similarity of the pattern of the passing days for each of the routes indicated by all records of the route history table 52 with respect to each of the records of the route table 58 (step S4404).

The daily observation value acquisition part 44 extracts the pattern of the passing days of the record having the highest cosine similarity for each of the combinations of the route ID and the observation item from the route history table 52 (step S4405). It is possible to specify the year indicating a most similar pattern of the passing days. The pattern of the passing days may be indicated in the model history 71 for each combination of the route ID and the observation item. Alternatively, the year indicating the most similar pattern of the passing days may be indicated in the model history 71 so as to be associated with the route history table 52.

The daily observation value acquisition part 44 creates a prediction table 72, in which the relation where the item "PASSING DAYS" has not been set in the route table 58 is predicted by using the model history 71 (step S4406).

The daily observation value acquisition part 44 predicts the passing days for each of the combinations of the route IDs and the observation item of the route table 58. The pattern of the passing days corresponding to the combination is acquired from the model history 71, and the passing days are set to the relation where the passing days are not set in the route table 58. The prediction table 72 is created. In the prediction table 72, the relation where the passing days are not set indicates blank in the route table 58.

Next, the daily observation value acquisition part 44 creates a group table 73, in which the observation items of the phenological observation item master 53 are grouped (step S4407). As an example, in the group table 73, the observation items "crab", "skiing", and the like are grouped into "winter".

The daily observation value acquisition part 44 applies least passing days for each of the relations by using the records of the observation items for the same season in the prediction table 72, and creates a season pattern table 74, which indicates a pattern of the passing days for each of the season (step S4408). The season pattern table 74 indicates the observation tendency for each of the seasons for each of the route IDs. That is, four records of "Sprint", "summer", "autumn", and "winter" are created for each of the route IDs.

Accordingly, the daily observation value acquisition part 44 calculates the degree for each of the seasons for each of the regions (step S4409). As an example, in a sequence from north to south, for each of "spring", "summer", "autumn", and "winter", the degree indicating the likelihood to be the current season is calculated. The degree is acquired by the following expression:

$$[(365 \text{ days} - \text{remaining days}) \div 365] \times 100.$$

A calculation example of each degree of the seasons will be described for the region "Hokkaido". By searching for the prefecture 1 of the relation table 61 by using a word "Hokkaido", the combination of the route ID and the relation ID is acquired.

By searching for the season pattern table 74 by the acquired combination, the passing days are referred to for each of "spring", "summer", "autumn", and "winter". The search is conducted for the record as a subject, in which the relation 1 indicates the blank in the prediction table 72. The blank indicates that the observation item of the season has been observed in the prediction table 72. For each of the subject records, the passing days are added immediately before a cell specified by the combination. A total passing days corresponds to remaining days to reach the season.

When one day is indicated as the remaining days in a "winter" record, the degree "100" is acquired by the above expression. A zero day may be indicated as the remaining days. In this case, it is determined that "winter" has already come, and the degree is set as "100". When 160 days are indicated as the remaining days in a "spring" record, the degree "56" is acquired.

When a predicted value for the passing days of the relation 1 exists for the observation item related to "summer", a "summer" record does not exist for the combination. This is a case in which any of the phenomena of the observation items of "summer" has not been observed. Accordingly, when it is determined that "Hokkaido" is not likely to be in "summer", the degree is set as "0". When the predicted value for the passing days is set in "autumn", or when the "summer" record does not exist, the degree is set as "0" in the same manner.

In a year unit, the degrees are indicated in an order of "winter", "spring", "summer", and "autumn". The degree of "winter" is "100". The degree of "spring" is "56". The degrees of "summer" and "autumn" are "0".

FIG. 18 is a flowchart for explaining an observation location association process conducted by the observation location association part. In FIG. 18, the observation location association part 45 acquires an address of each of the observation locations from the nationwide observation location homepage 91 (step S4501).

The observation location association part 45 creates the administrative division graph model 56 (FIG. 8), in which the adjacent nodes are linked to each other, based on the address of the acquired observation location, as the observation locations are represented by the nodes (step S4502).

Then, the observation location association part 45 applies numbers to all patterns for each of the routes and numbers to each of the relations based on the administrative division graph model 56 (step S4503). The route ID and the relation ID are applied.

A size of the node (a size of the region) may be changed depending on how much detailed information is used in the acquired address of each of the observation locations. The above is explained as the node is specified by the prefecture name. Alternatively, the size of the node may include the prefecture and the municipality.

In a case in which the node is identified by the prefecture and the municipality, if a broad area such as Hokkaido is exemplified, a state of a phenological front becomes different between Wakkanai and Hakodate. In Wakanai, "winter" is observed. However, "winter" may not be observed in Hakodate. In this embodiment, it is possible to provide the travel plan corresponding to such a difference.

Next, a search process conducted by the search process part 40b will be described with reference to FIG. 19 to FIG. 22. First, the first seasonal travel search part 46 will be described.

FIG. 19 is a diagram for explaining an entire first seasonal travel search process. In FIG. 19, the first seasonal travel search part 46 further includes a seasonal event region specification part 46a and a travel plan search part 46b.

The seasonal event region specification part 46a specifies the region, in which the event is in the season, in response to the keyword search request 7a received from the user terminal 3. The seasonal event region specification part 46a specifies the event by searching for the event keyword master 55 by the keyword indicated by a keyword search request 7a. The seasonal event region specification part 46a searches for the event season master 54 by the specified event, and specifies the season. Then, the seasonal event region specification part 46a extracts the records of the specified season from the phenological front table 59, and specifies the region having the highest degree.

The travel plan search part 46b reduces a number of records to be search subjects by the region specified from the travel plan table 51, retrieves records by the keywords, and acquires the plan names from the retrieved records. The acquired plan names are preferentially displayed as the search result at the user terminal 3.

At the user terminal 3, the screen G31 is provided from the travel plan providing server 100. The screen G31 includes an input area 3a, a search button 3b, a message display area 3c, a search result display area 3d, and the like.

The input area 3a is used by the user to enter the event as the purpose of the travel. The search button 3b is regarded as a button for search for the travel plan by using the entered event as the keyword. The message display area 3c is regarded as an area to display the travel plan for the entered event to be in the season. The search result display area 3d is regarded as an area to display the search result acquired by the first seasonal travel search part 46.

In this example, when "crab" is entered in the input area 3a and the search button 3b is pressed, a message such as "Now is the season !" or the like is displayed in the message display area 3c by pressing the search button 3b, and the search result is displayed in the search result display area 3d.

In a case in which the prefectures are represented by the nodes in the administrative division graph model 56, the travel plan of the area "Hokkaido" is extracted. In the search result display area 3d, the travel plan name is displayed in an order as follows:

full-of-crabs tour in Hakodate
Goryokaku tour in Hakodate
crab tour in Wakkanai

In the embodiment, the season "winter" is specified as a specific season for "crab", and "Hokkaido" is specified as the region where "winter" is currently confirmed. The plan names are acquired from the records indicating "Hokkaido" in the item "REGION" among the records, in which the item "EVENT" indicates "crab" in the travel plan table 51. Accordingly, the user acquires appropriate travel plans to the region where the "crab" is in the season.

In the travel plan providing server 100, the keyword of the keyword search request 7a is stored in the user interest and idea table 69, by associating with information specifying the user terminal 3 of a sender of the keyword search request 7a, a user ID used to log in, or the like. A number indicating the same keyword may be counted.

FIG. 20 is a flowchart for explaining the first seasonal travel search process conducted by the first seasonal travel search part. In FIG. 20, when the user searches the travel plan by a desired keyword at the user terminal 3, the keyword search request 7a is sent to the travel plan providing server 100. The first seasonal travel search part 46 receives the keyword search request 7a from the user terminal 3 (step S4601).

In response to receiving the keyword search request 7a, the seasonal event region specification part 46a of the first seasonal travel search part 46 refers to the event keyword master 55 and the event season master 54, and specifies the season corresponding to the keyword indicated by the keyword search request 7a (step S4602). The seasonal event region specification part 46a specifies a most seasonal region by using the phenological front table 59 (step S4603).

Next, the travel plan search part 46b refers to the travel plan table 51, and preferentially displays the travel plan corresponding to the keyword among the travel plans registered for the specified region as the search result at the user terminal 3 (step S4604). After that, the first seasonal travel search part 46 terminates the first seasonal travel search process.

FIG. 21 is a diagram for explaining the entire second seasonal travel search process. In FIG. 21, the second seasonal travel search part 47 further includes a hobby-in-season region determination part 47a, and a travel plan search part 47b.

The hobby-in-season region determination part 47a refers to the user interest and idea table 69 with respect to the recommended plan search request 7b received from the user terminal 3, and specifies the seasonal region for the event corresponding to the keyword, by using the keyword, which the user previously used. The hobby-in-season region determination part 47a specifies the event by searching for the event keyword master 55 by the keyword acquired from the user interest and idea table 69. The hobby-in-season region determination part 47a specifies the season by searching for the event season master 54 by the specified event.

The travel plan search part 47b reduces the number of the records of the search subjects by the region specified from the travel plan table 51, searches for the records, of which the number is reduced, by the keywords, and acquires the plan names from the searched records.

At the user terminal 3, a screen G32 is provided from the travel plan providing server 100. The screen G32 is similar to the screen G31 in FIG. 20, except that the input area 3a and the search button 3b are omitted, that is, includes the message display area 3c, the search result display area 3d, and the like. The message display area 3c and the search result display area 3d are the same as those of the screen G31, and the explanation thereof will be omitted.

In this example, a case, in which histories of previous searches of the travel plan by users entering "crab" are stored in the user interest and idea table 69, is illustrated. After that, when the same user accesses the travel plan providing server 100, the recommended plan search request 7b is sent to the travel plan providing server 100, the "crab" is used as the keyword, the message such as that "Now is the season !" or the like is displayed in the message display area 3c, and the search result is displayed in the search result display area 3d.

A search result example will be described below. In the following, the municipalities more detailed than the prefecture are defined as the nodes in the administrative division graph model 56, and it is assumed that the user uses the travel plan providing server 100 immediately before winter.

Even in the same Hokkaido, the winter comes to Wakkanai earlier than Hakodate. Accordingly, in the embodiment, the travel plans for the region "Wakkanai in Hokkaido" are extracted. In the search result display area 3d, the travel plan name is displayed in an order as follows:

crab tour in Wakkanai
all crabs in Wakkanai
travelling in Wakkanai for crab

In the embodiment, the season "winter" is specified as a specific season for "crab", and "Wakkanai in Hokkaido" is specified as the region where "winter" is currently confirmed. The plan names are acquired from the records indicating "Wakkanai in Hokkaido" in the item "REGION" among the records, in which the item "EVENT" indicates "crab" in the travel plan table 51. Accordingly, the user acquires appropriate travel plans to the region where the "crab" is in season.

In the embodiment, it is possible to restrict and specify the seasonal region by reducing the size of the region (node) by further specifying the address in detail. The first seasonal travel search process is also performed in the same manner. In a case in which the a node is associated with another node in a municipality level in the administrative division graph model 56, it is possible to specify the region into "Wakkanai in Hokkaido", and acquire the search result of the search result display area 3d of the screen G32.

Also, similar to the example of the first seasonal travel search process, when the size of the region (node) corresponds to the prefecture, even in the second seasonal travel search process, the search result of the search result display area 3d of the screen G31 is acquired.

FIG. 22 is a flowchart for explaining the second seasonal travel search process conducted by the second seasonal travel search part.

In FIG. 22, at the user terminal 3, when the user opens a recommended plan screen provided by the travel plan providing server 100, the user terminal 3 sends the recommended plan search request 7b to the travel plan providing server 100. The second seasonal travel search part 47 receives the recommended plan search request 7b (step S4701).

In response to receiving the recommended plan search request 7b, the hobby-in-season region determination part 47a of the second seasonal travel search part 47 refers to the user interest and idea table 69, and acquires the keyword associated with the user (step S4702).

The hobby-in-season region determination part 47a refers to the event keyword master 55 and the event season master 54, and specifies the season corresponding to the acquired keyword (step S4703). The event is acquired by searching the event keyword master 55 by using the acquired keyword, and specifies the season by searching the event season master 54 by using the acquired event.

The travel plan search part 47b specifies a certain region, which is the best time in the specified season, by using the phenological front table 59 (step S4704). The travel plan search part 47b refers to the travel plan table 51, and preferentially displays the travel plan corresponding to the keyword among the travel plans registered for the specified region (step S4705). The steps S4704 and S4705 are the same as steps S4603 and S4604 conducted by the first seasonal travel search part 46. The second seasonal travel search part 47 terminates the second seasonal travel search process.

As described above, in the embodiment, based on the relationship between the keyword to search for the travel plan and the season, the travel plan to the region, which is the most recommended, is searched for by using the season determined based on records, in which the phenomena pertinent to the observation items of the biological seasons were observed.

It is possible to avoid missing the best time to see the seasonal event as a purpose of travel, when actually visiting a place by referring to the popularity ranking of the travel plan searched for by using the keyword.

In the above described embodiment, the season may be indicated by time. The time may indicate a term representing a section such as January, February, ... , spring, summer, autumn, or the like. Alternatively, the embodiment may include a table storing a correspondence relationship between the keyword and the term, a table storing an observation term of the living things for each of the regions, a table storing the travel plans by associating them with a combination of the region and the term or the keyword, and the like.

When receiving a search request based on an entered keyword, the travel plan providing server 100 refers to a table storing the correspondence relationship between the keyword and the term, and specifies the term corresponding to the entered keyword.

Next, the travel plan providing server 100 refers to the table storing the observation term of the living things for each of the regions, and specifies the region, for which a period corresponding to the specified term is recorded as an observation period.

Then, the travel plan providing server 100 refers to the table storing the travel plans by associating with the combination of the region and the term or the keyword, and specifies the travel plan corresponding to the specified term or the keyword, and the specified region.

Accordingly, the travel plan providing server 100 may output the specified travel plan.

## Claims

1. A travel plan search program that causes a computer (100) to execute a process comprising:

   specifying a term corresponding to an entered keyword (3a) by referring to a first storage part which stores correspondence relationships between keywords and terms, in response to receiving a search request (7a) including the entered keyword;
   specifying a region, for which a period corresponding to the specified term is recorded as an observation period, by referring to a second storage part (53) which stores observation periods of living things for each of regions;
   specifying a travel plan (3d) corresponding to a combination of the specified term or the keyword, and the specified region, by referring to a third storage part (51) which stores travel plans (3d) corresponding to regions, and periods or keywords respectively; and
   outputting the specified travel plan (3d).

2. A travel plan search program that causes a computer (100) to execute a process comprising:

   specifying a season corresponding to an entered keyword (3a) by referring to a first storage part (54, 55) which stores a correspondence relationship between keywords and seasons, in response to receiving a search request (7a) based on the entered keyword;
specifying a region having a highest degree for the specified season by referring to a second storage part (59) which stores a degree indicating a likelihood for each of seasons for each of regions, the degree being acquired based on observation periods of living things;
acquiring a travel plan corresponding to a combination of the specified region and the entered keyword (3a) by referring to a third storage part (51) which stores the travel plan corresponding to the regions, and periods or keywords respectively; and
outputting the acquired travel plan.

**3.** The travel plan search program as claimed in claim 2, wherein the search request (7a) includes the entered keyword.

**4.** The travel plan search program as claimed in claims 2 or 3, wherein
the search request (7a) includes identification of a request originator; and
the keyword pertinent to the search request (7a) is acquired by referring to a table, which stores the keyword previously entered by the request originator.

**5.** The travel plan search program as claimed in any one of claims 2 through 4, wherein the process further comprises:

predicting days until the living thing representing the season corresponding to the keyword is observed, by using, for each of the regions, a first pattern of previous passing days similar to a second pattern of current passing days, the first pattern being stored in a fourth storage part (52) the passing days indicating days from when the living thing representing each of the seasons is observed at a region to when the living thing is observed at an adjacent region; and
calculating the degree for each of the seasons for each of the regions based on the predicted days, and storing the degrees in the second storage part (59).

**6.** The travel plan search program as claimed in claim 5, wherein the process further comprises:

creating season patterns, to which minimum passing days are applied for each of the regions, among multiple patterns of the passing days recorded for the living thing representing each of the seasons; and
predicting the days until the living thing is observed by using one of the season patterns.

**7.** A travel plan search method comprising:

specifying a season corresponding an entered keyword (3a) by referring to a first storage part (54, 55) which stores a correspondence relationship between keywords and seasons, in response to receiving a search request (7a) based on the entered keyword;
specifying a region having a highest degree for the specified season by referring to a second storage part (59) which stores a degree indicating a likelihood for each of seasons for each of regions, the degree being acquired based on observation periods of living things;
acquiring a travel plan corresponding to a combination of the specified region and the entered keyword (3a) by referring to a third storage part (51) which stores the travel plan corresponding to the regions, and periods or keywords respectively; and
outputting the acquired travel plan.

**8.** An information processing apparatus comprising:

a specifying part configured to specify a season corresponding an entered keyword (3a) by referring to a first storage part (54, 55) which stores a correspondence relationship between keywords and seasons, in response to receiving a search request (7a) based on the entered keyword;
a specifying part configured to specify a region having a highest degree for the specified season by referring to a second storage part (59) which stores a degree indicating a likelihood for each of seasons for each of regions, the degree being acquired based on observation periods of living things; and
a search part configured to acquire a travel plan corresponding to a combination of the specified region and the entered keyword (3a) by referring to a third storage part (51) which stores the travel plan corresponding to the regions, and periods or keywords respectively, and to output the acquired travel plan.

FIG.1

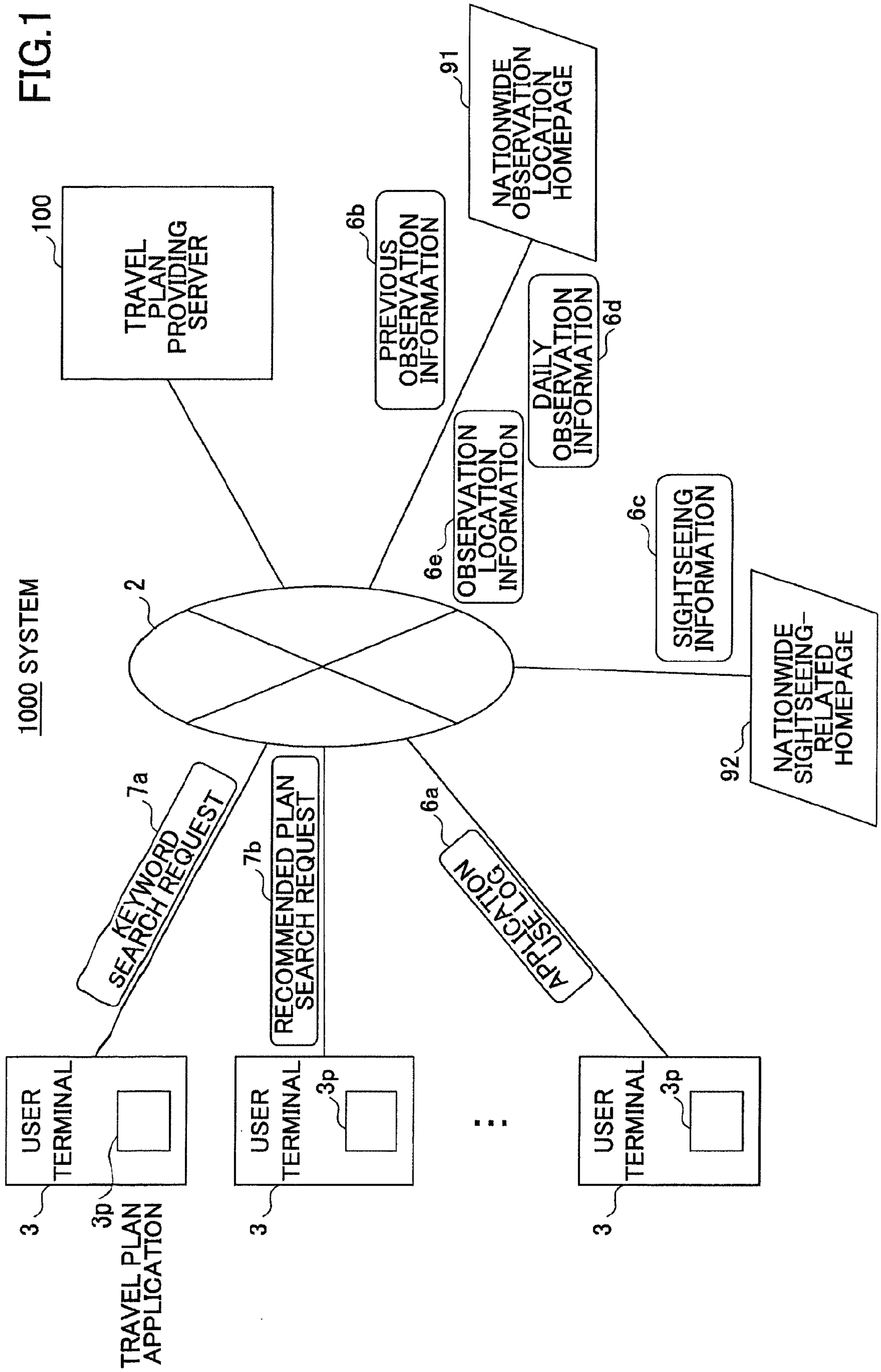
1000 SYSTEM
100
TRAVEL PLAN PROVIDING SERVER
91
NATIONWIDE OBSERVATION LOCATION HOMEPAGE
6b
PREVIOUS OBSERVATION INFORMATION
6d
DAILY OBSERVATION INFORMATION
6e
OBSERVATION LOCATION INFORMATION
6c
SIGHTSEEING INFORMATION
92
NATIONWIDE SIGHTSEEING-RELATED HOMEPAGE
2
7a
KEYWORD SEARCH REQUEST
7b
RECOMMENDED PLAN SEARCH REQUEST
6a
APPLICATION USE LOG
3
USER TERMINAL
3p
TRAVEL PLAN APPLICATION
3
USER TERMINAL
3p
...
3
USER TERMINAL
3p

FIG.2

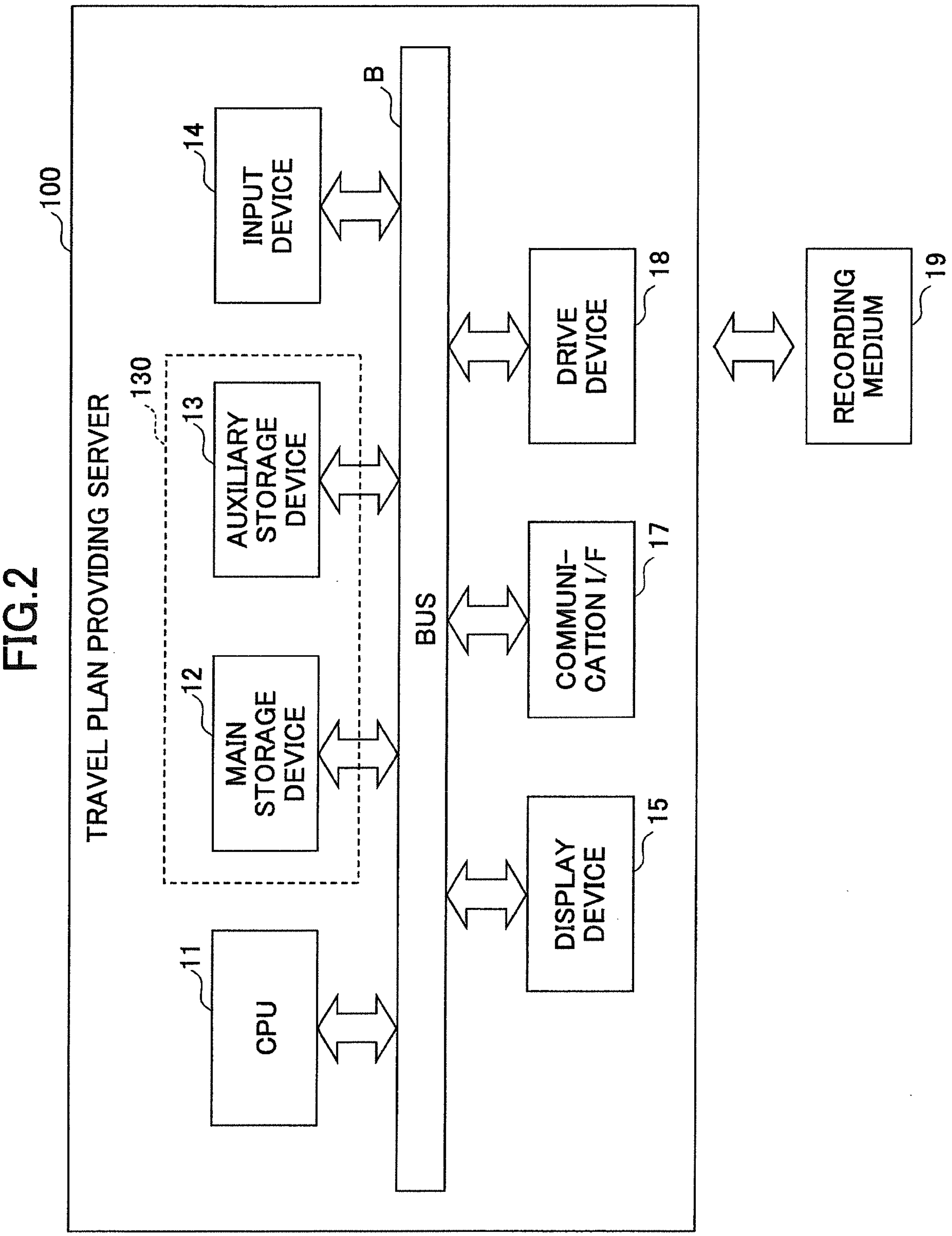
100
TRAVEL PLAN PROVIDING SERVER
130
11
CPU
12
MAIN STORAGE DEVICE
13
AUXILIARY STORAGE DEVICE
14
INPUT DEVICE
B
BUS
15
DISPLAY DEVICE
17
COMMUNI-CATION I/F
18
DRIVE DEVICE
19
RECORDING MEDIUM

FIG.3

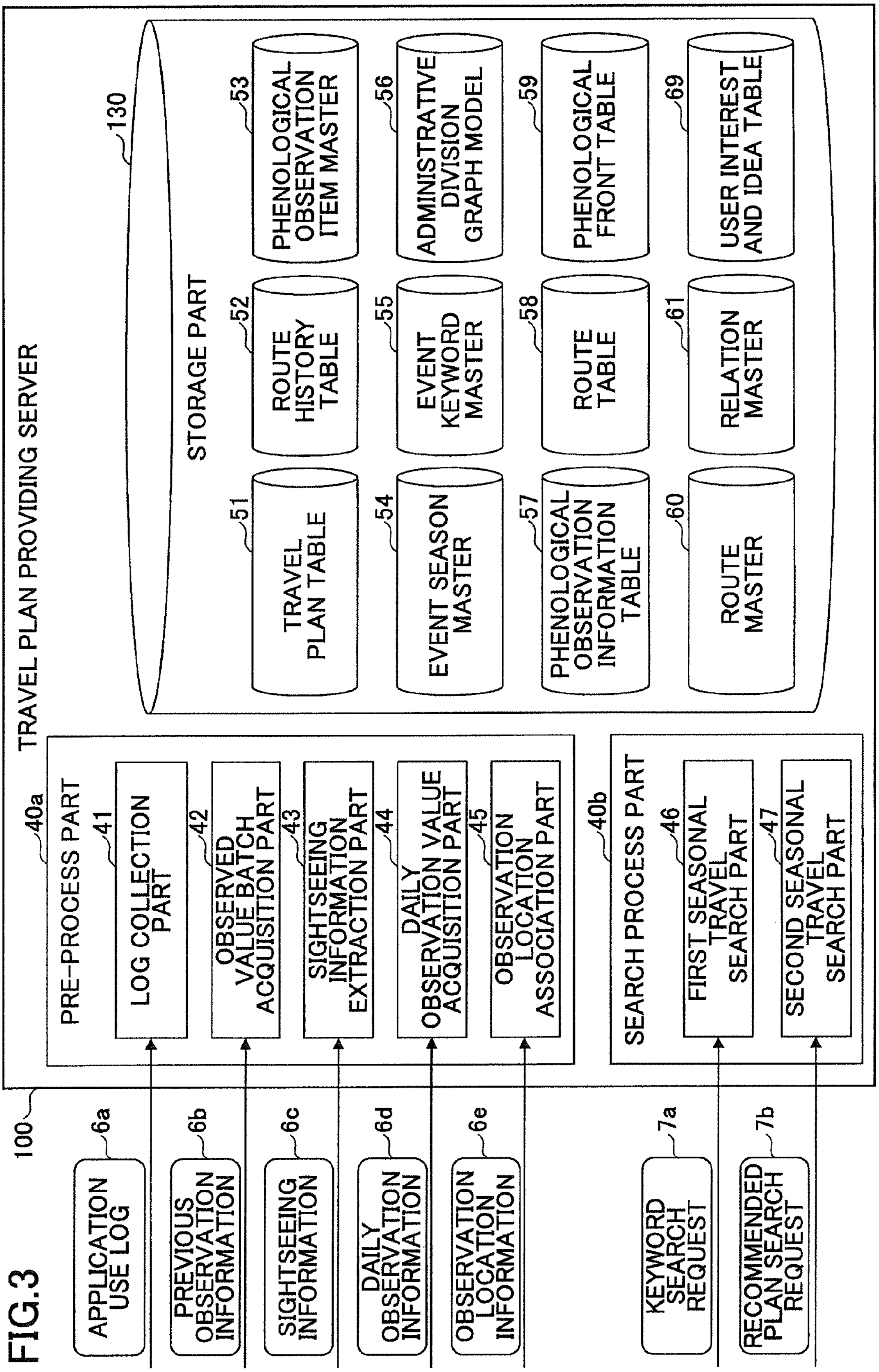
100
TRAVEL PLAN PROVIDING SERVER
40a
PRE-PROCESS PART
41 LOG COLLECTION PART
42 OBSERVED VALUE BATCH ACQUISITION PART
43 SIGHTSEEING INFORMATION EXTRACTION PART
44 DAILY OBSERVATION VALUE ACQUISITION PART
45 OBSERVATION LOCATION ASSOCIATION PART
40b
SEARCH PROCESS PART
46 FIRST SEASONAL TRAVEL SEARCH PART
47 SECOND SEASONAL TRAVEL SEARCH PART
130
STORAGE PART
51 TRAVEL PLAN TABLE
52 ROUTE HISTORY TABLE
53 PHENOLOGICAL OBSERVATION ITEM MASTER
54 EVENT SEASON MASTER
55 EVENT KEYWORD MASTER
56 ADMINISTRATIVE DIVISION GRAPH MODEL
57 PHENOLOGICAL OBSERVATION INFORMATION TABLE
58 ROUTE TABLE
59 PHENOLOGICAL FRONT TABLE
60 ROUTE MASTER
61 RELATION MASTER
69 USER INTEREST AND IDEA TABLE
6a APPLICATION USE LOG
6b PREVIOUS OBSERVATION INFORMATION
6c SIGHTSEEING INFORMATION
6d DAILY OBSERVATION INFORMATION
6e OBSERVATION LOCATION INFORMATION
7a KEYWORD SEARCH REQUEST
7b RECOMMENDED PLAN SEARCH REQUEST

FIG.4

51 TRAVEL PLAN TABLE

| PLAN NAME | EVENT | REGION |
|---|---|---|
| STREAM FISHING TOUR AT CENTRAL HOKKAIDO | STREAM FISHING | HOKKAIDO |
| FLOWER VIEWING TOUR IN FUKUOKA | FLOWER VIEWING | FUKUOKA |
| FULL-OF-CRABS TOUR IN HAKODATE | CRAB | HAKODATE IN HOKKAIDO |
| CRAB TOUR IN WAKKANAI | CRAB | WAKKANAI IN HOKKAIDO |
| ⋮ | ⋮ | ⋮ |

FIG.5

52 ROUTE HISTORY TABLE

| ROUTE ID | OBSERVATION ITEM | YEAR | RELATION 1 - PASSING DAYS | RELATION 2 - PASSING DAYS | | |
|---|---|---|---|---|---|---|
| XXXXX | CAMELLIA | 1980 | 1 DAY | 3 DAYS | | |
| YYYYY | CAMELLIA | 1980 | 1 DAY | 1 DAY | | |
| ZZZZZ | CAMELLIA | 1980 | 3 DAYS | 7 DAYS | | |
| ⋮ | ⋮ | ⋮ | ⋮ | ⋮ | | |

# FIG.6

53 PHENOLOGICAL OBSERVATION ITEM MASTER

| OBSERVATION ITEM | PHENOMENON | SEASON |
|---|---|---|
| CAMELLIA | BLOOMED | WINTER |
| HYDRANGEA | BLOOMED | SUMMER |
| NIGHTINGALE | FIRST SINGING | SUMMER |
| ⋮ | ⋮ | ⋮ |

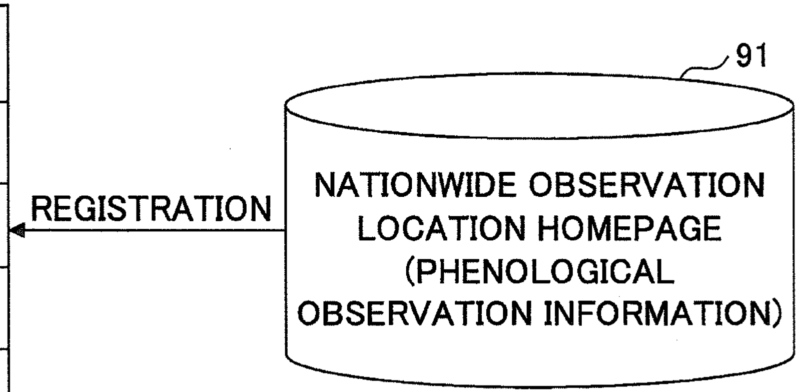

NATIONWIDE
SIGHTSEEING-RELATED
HOMEPAGE
92

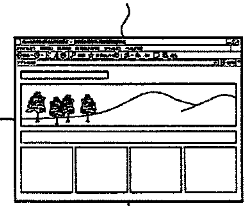

PERIODICAL EXTRACTION
OF EVENT CONTENT
+
WORD ANALYSIS

54 EVENT SEASON MASTER

| EVENT | SEASON |
| --- | --- |
| STREAM FISHING | SUMMER |
| URBAN AREA TOUR | SPRING, SUMMER, AUTUMN, WINTER |
| CRAB | WINTER |
| ⋮ | ⋮ |

55 EVENT KEYWORD MASTER

| EVENT | KEYWORD 1 | KEYWORD 2 | |
| --- | --- | --- | --- |
| FLOWER VIEWING | CHERRY BLOSSOM | PLUM | |
| CRAB | HAIR CRAB | KING CRAB | |
| SKIING | SKIING | SNOW BOARD | |
| ⋮ | ⋮ | ⋮ | |

FIG.7

FIG.8

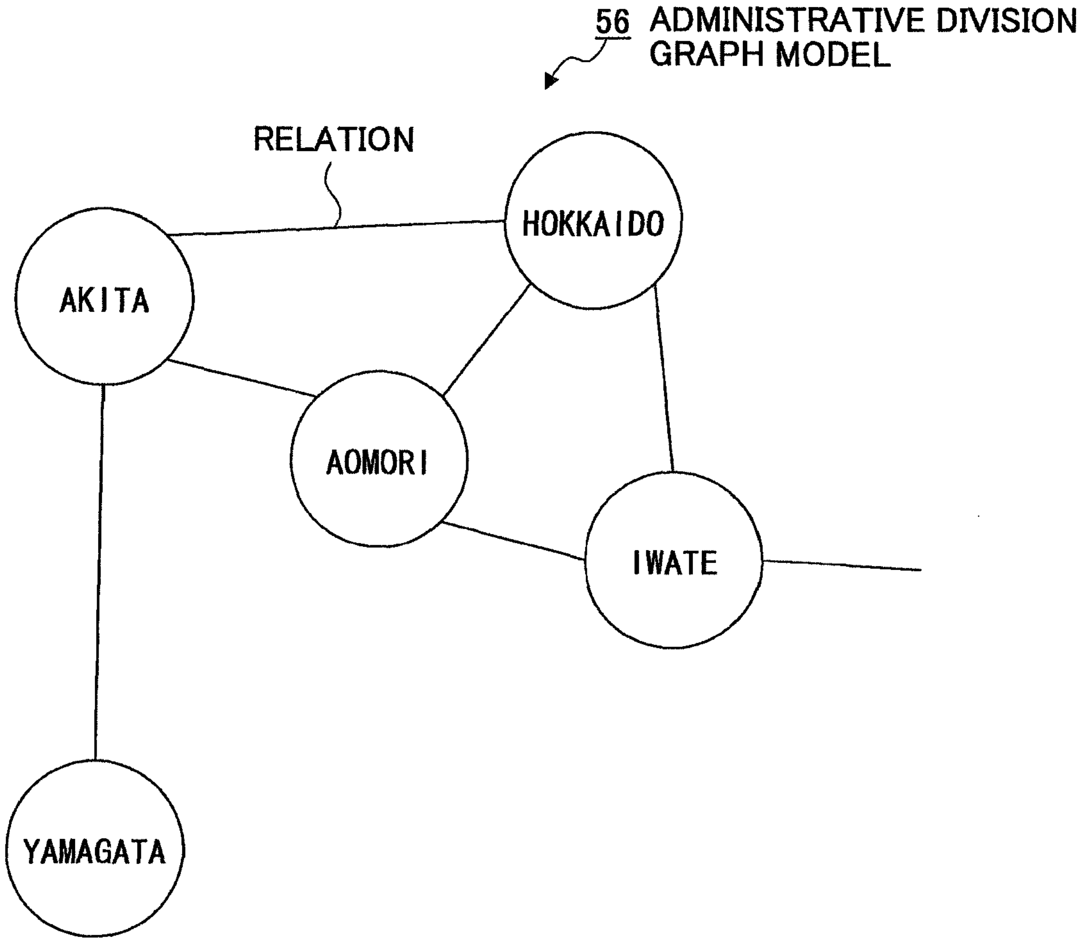
56 ADMINISTRATIVE DIVISION GRAPH MODEL
RELATION
HOKKAIDO
AKITA
AOMORI
IWATE
YAMAGATA

FIG.9

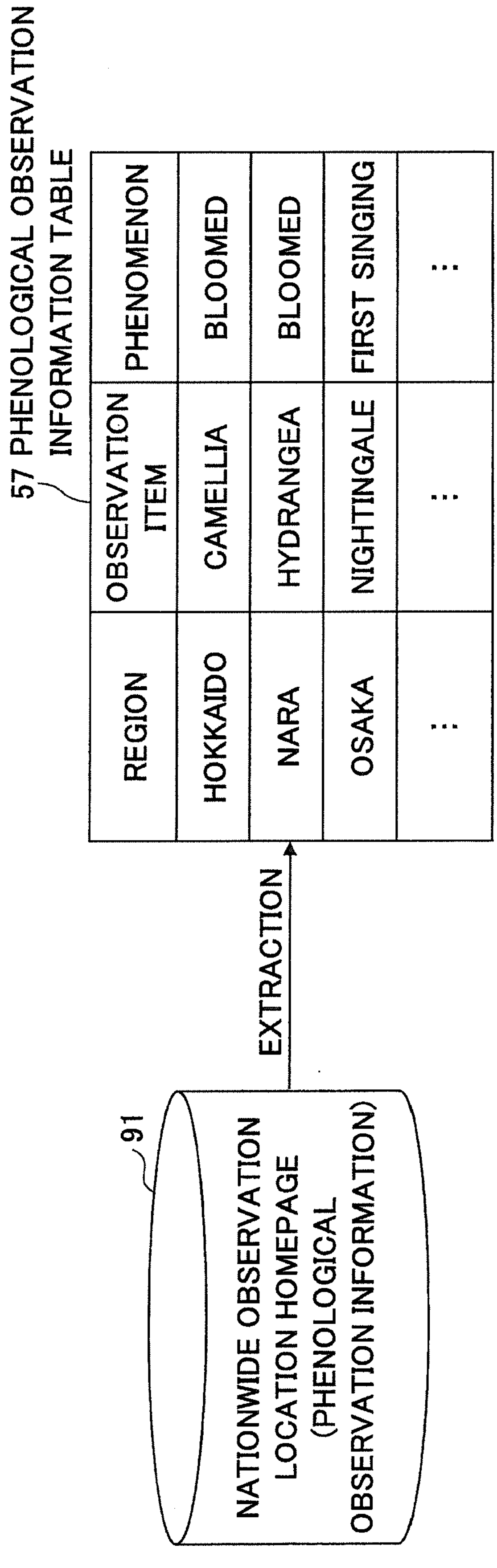
57 PHENOLOGICAL OBSERVATION INFORMATION TABLE
REGION
OBSERVATION ITEM
PHENOMENON
HOKKAIDO
CAMELLIA
BLOOMED
NARA
HYDRANGEA
BLOOMED
OSAKA
NIGHTINGALE
FIRST SINGING
...
...
...
EXTRACTION
91
NATIONWIDE OBSERVATION LOCATION HOMEPAGE (PHENOLOGICAL OBSERVATION INFORMATION)

58 ROUTE TABLE

| ROUTE ID | OBSERVATION ITEM | RELATION 1 | RELATION 2 | RELATION 3 | RELATION 4 |
|---|---|---|---|---|---|
| XXXXX | CAMELLIA | 1 DAY | 3 DAYS | – | – |
| YYYYY | CAMELLIA | 1 DAY | 1 DAY | – | – |
| ZZZZZ | CAMELLIA | 3 DAYS | 7 DAYS | – | – |
| ⋮ | ⋮ | ⋮ | ⋮ | ⋮ | ⋮ |

EXTRACTION

52 ROUTE HISTORY TABLE

| ROUTE ID | OBSERVATION ITEM | YEAR | RELATION 1 | RELATION 2 | |
|---|---|---|---|---|---|
| XXXXX | CAMELLIA | 1980 | 1 DAY | 3 DAYS | |
| XXXXX | CAMELLIA | 1981 | 1 DAY | 1 DAY | |
| YYYYY | CAMELLIA | 1980 | 1 DAY | 1 DAY | |
| ZZZZZ | CAMELLIA | 1980 | 3 DAYS | 7 DAYS | |
| ⋮ | ⋮ | ⋮ | ⋮ | ⋮ | |

FIG.10

FIG.11

59 PHENOLOGICAL FRONT TABLE

| REGION | SEASON | DEGREE |
|---|---|---|
| HOKKAIDO | WINTER | 100 |
| HOKKAIDO | SPRING | 56 |
| HOKKAIDO | SUMMER | 0 |
| HOKKAIDO | AUTUMN | 0 |
| ⋮ | ⋮ | ⋮ |

FIG.12

60 ROUTE MASTER TABLE

| ROUTE ID | PREFECTURE 1 | PREFECTURE 2 | PREFECTURE 3 | PREFECTURE 4 | | |
|---|---|---|---|---|---|---|
| XXXXX | HOKKAIDO | AOMORI | IWATE | ··· | | |
| YYYYY | HOKKAIDO | AOMORI | AKITA | YAMAGATA | | |
| ZZZZZ | HOKKAIDO | AKITA | AOMORI | ··· | | |
| ⋮ | ⋮ | ⋮ | ⋮ | ⋮ | | |

FIG.13

61 RELATION TABLE

| ROUTE ID | RELATION ID | PREFECTURE 1 | PREFECTURE 2 |
|---|---|---|---|
| XXXXX | RELATION 1 | HOKKAIDO | AOMORI |
| XXXXX | RELATION 2 | AOMORI | IWATE |
| YYYYY | RELATION 1 | HOKKAIDO | AOMORI |
| ⋮ | ⋮ | ⋮ | ⋮ |

FIG.14

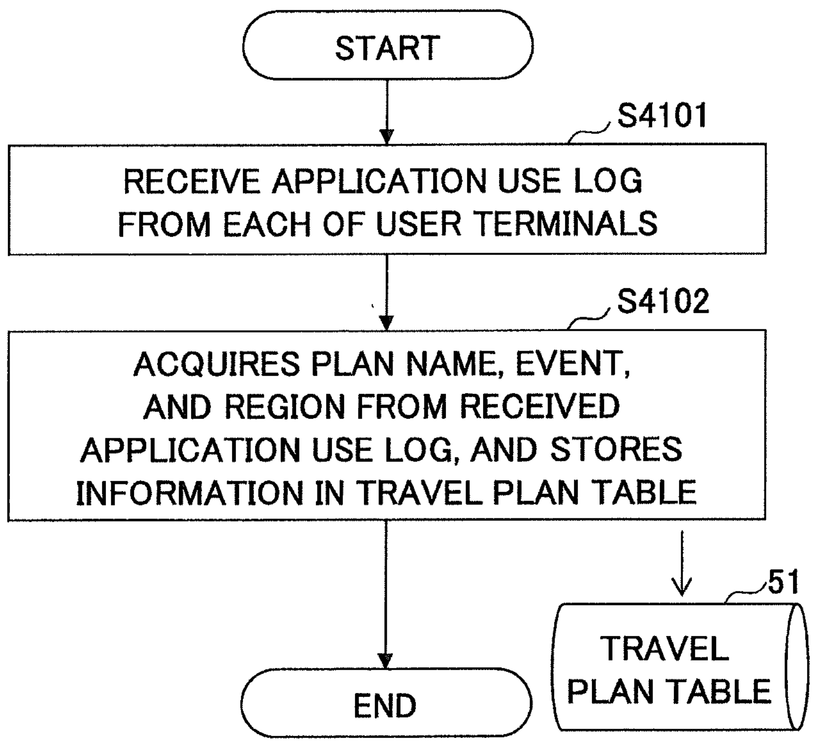

FIG.15

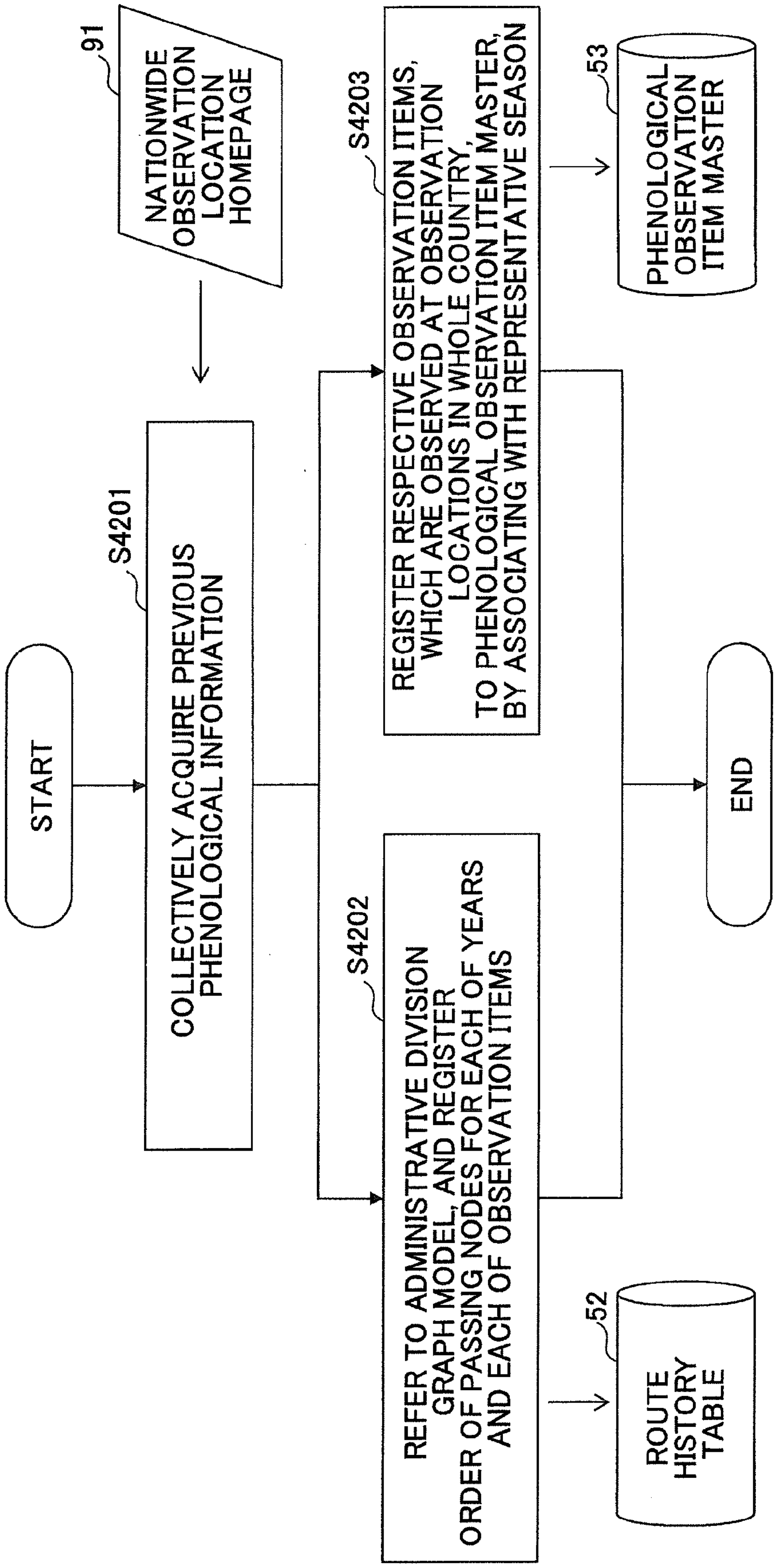
START
S4201
COLLECTIVELY ACQUIRE PREVIOUS PHENOLOGICAL INFORMATION
91
NATIONWIDE OBSERVATION LOCATION HOMEPAGE
S4202
REFER TO ADMINISTRATIVE DIVISION GRAPH MODEL, AND REGISTER ORDER OF PASSING NODES FOR EACH OF YEARS AND EACH OF OBSERVATION ITEMS
52
ROUTE HISTORY TABLE
S4203
REGISTER RESPECTIVE OBSERVATION ITEMS, WHICH ARE OBSERVED AT OBSERVATION LOCATIONS IN WHOLE COUNTRY, TO PHENOLOGICAL OBSERVATION ITEM MASTER, BY ASSOCIATING WITH REPRESENTATIVE SEASON
53
PHENOLOGICAL OBSERVATION ITEM MASTER
END

FIG.16

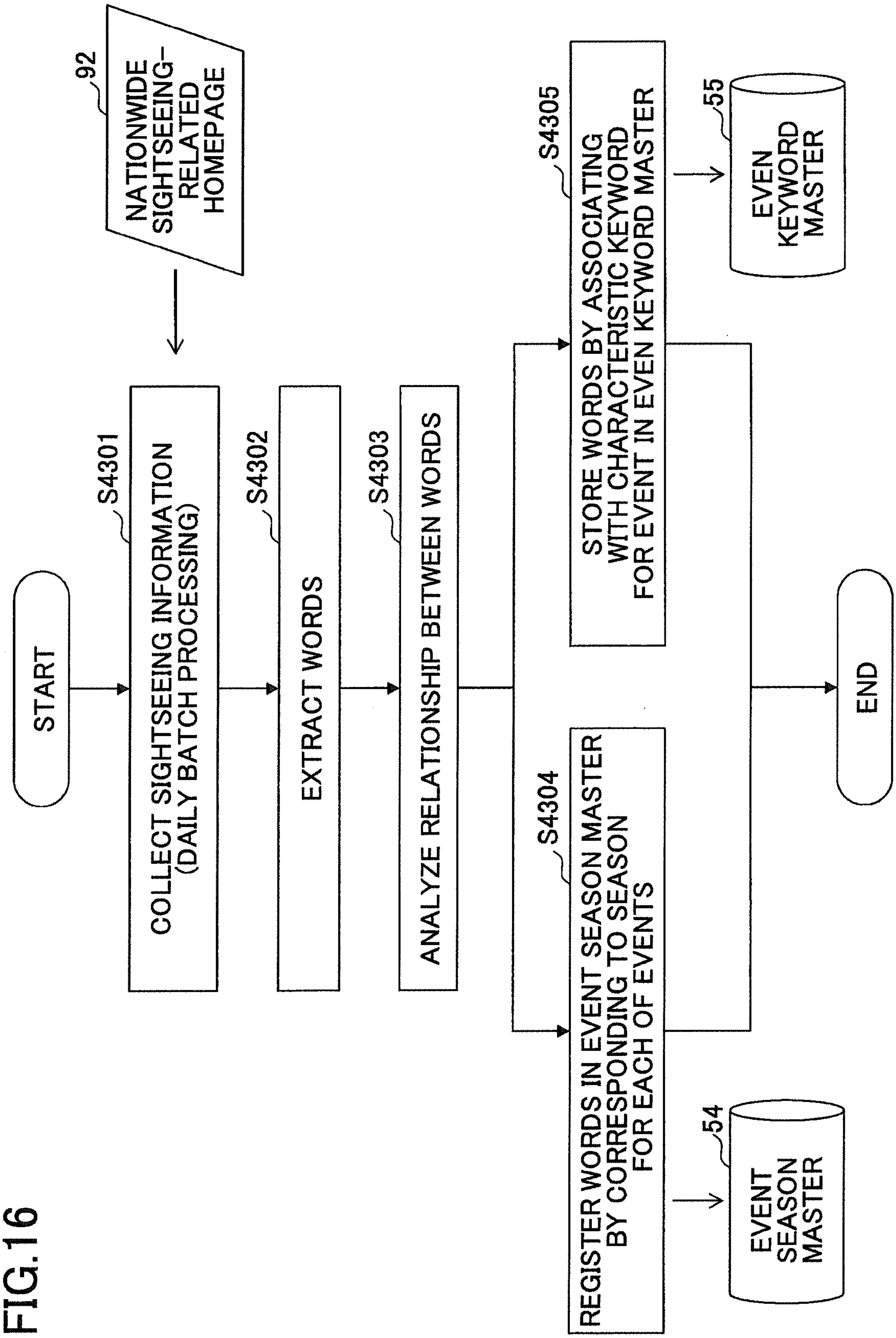
START
92
NATIONWIDE SIGHTSEEING-RELATED HOMEPAGE
S4301
COLLECT SIGHTSEEING INFORMATION (DAILY BATCH PROCESSING)
S4302
EXTRACT WORDS
S4303
ANALYZE RELATIONSHIP BETWEEN WORDS
S4304
REGISTER WORDS IN EVENT SEASON MASTER BY CORRESPONDING TO SEASON FOR EACH OF EVENTS
54
EVENT SEASON MASTER
S4305
STORE WORDS BY ASSOCIATING WITH CHARACTERISTIC KEYWORD FOR EVENT IN EVEN KEYWORD MASTER
55
EVEN KEYWORD MASTER
END

FIG.17

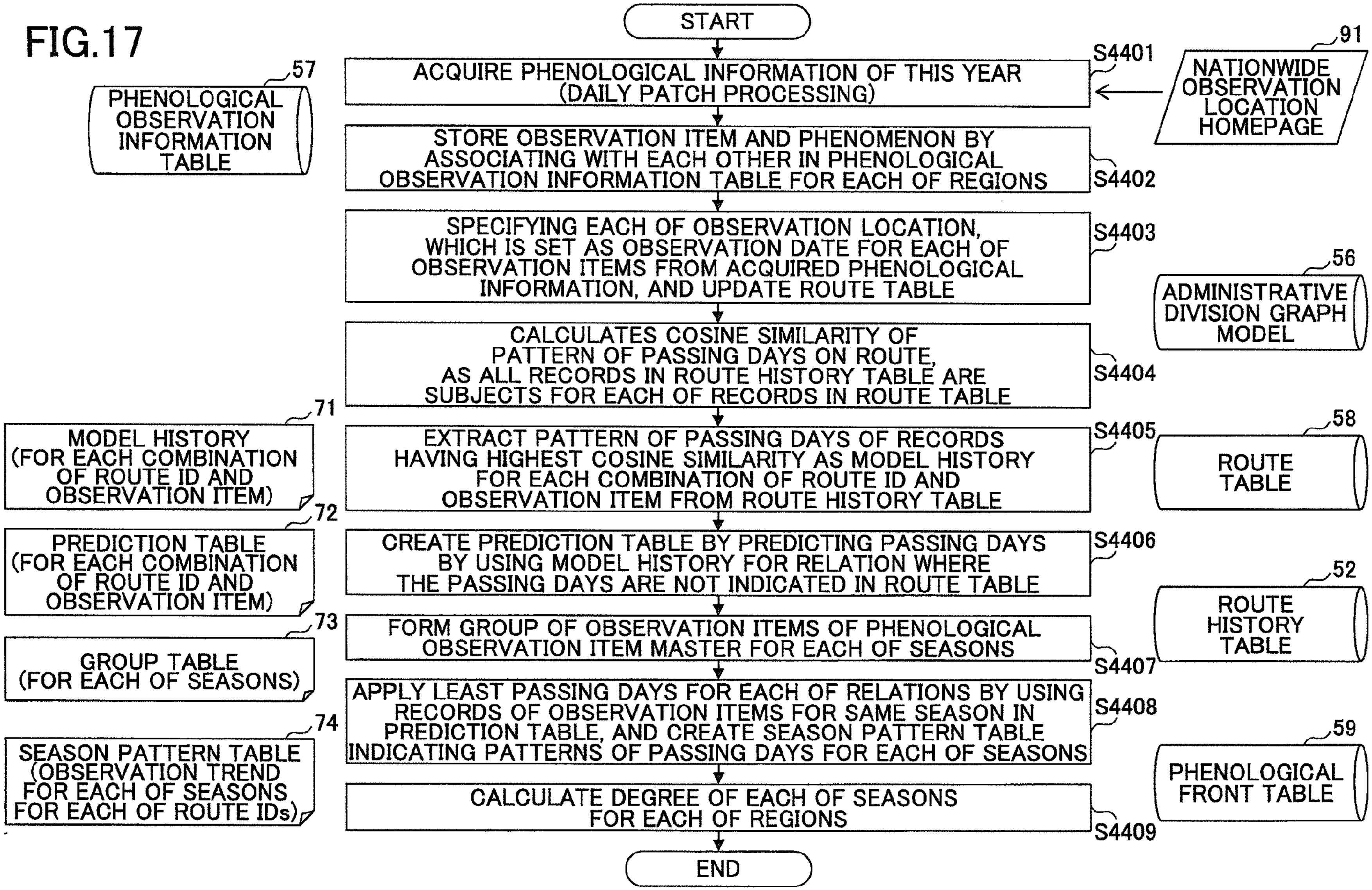
START
ACQUIRE PHENOLOGICAL INFORMATION OF THIS YEAR (DAILY PATCH PROCESSING)
S4401
NATIONWIDE OBSERVATION LOCATION HOMEPAGE
91
PHENOLOGICAL OBSERVATION INFORMATION TABLE
57
STORE OBSERVATION ITEM AND PHENOMENON BY ASSOCIATING WITH EACH OTHER IN PHENOLOGICAL OBSERVATION INFORMATION TABLE FOR EACH OF REGIONS
S4402
SPECIFYING EACH OF OBSERVATION LOCATION, WHICH IS SET AS OBSERVATION DATE FOR EACH OF OBSERVATION ITEMS FROM ACQUIRED PHENOLOGICAL INFORMATION, AND UPDATE ROUTE TABLE
S4403
ADMINISTRATIVE DIVISION GRAPH MODEL
56
CALCULATES COSINE SIMILARITY OF PATTERN OF PASSING DAYS ON ROUTE, AS ALL RECORDS IN ROUTE HISTORY TABLE ARE SUBJECTS FOR EACH OF RECORDS IN ROUTE TABLE
S4404
EXTRACT PATTERN OF PASSING DAYS OF RECORDS HAVING HIGHEST COSINE SIMILARITY AS MODEL HISTORY FOR EACH COMBINATION OF ROUTE ID AND OBSERVATION ITEM FROM ROUTE HISTORY TABLE
S4405
ROUTE TABLE
58
MODEL HISTORY (FOR EACH COMBINATION OF ROUTE ID AND OBSERVATION ITEM)
71
CREATE PREDICTION TABLE BY PREDICTING PASSING DAYS BY USING MODEL HISTORY FOR RELATION WHERE THE PASSING DAYS ARE NOT INDICATED IN ROUTE TABLE
S4406
PREDICTION TABLE (FOR EACH COMBINATION OF ROUTE ID AND OBSERVATION ITEM)
72
ROUTE HISTORY TABLE
52
FORM GROUP OF OBSERVATION ITEMS OF PHENOLOGICAL OBSERVATION ITEM MASTER FOR EACH OF SEASONS
S4407
GROUP TABLE (FOR EACH OF SEASONS)
73
APPLY LEAST PASSING DAYS FOR EACH OF RELATIONS BY USING RECORDS OF OBSERVATION ITEMS FOR SAME SEASON IN PREDICTION TABLE, AND CREATE SEASON PATTERN TABLE INDICATING PATTERNS OF PASSING DAYS FOR EACH OF SEASONS
S4408
SEASON PATTERN TABLE (OBSERVATION TREND FOR EACH OF SEASONS FOR EACH OF ROUTE IDs)
74
PHENOLOGICAL FRONT TABLE
59
CALCULATE DEGREE OF EACH OF SEASONS FOR EACH OF REGIONS
S4409
END

FIG.18

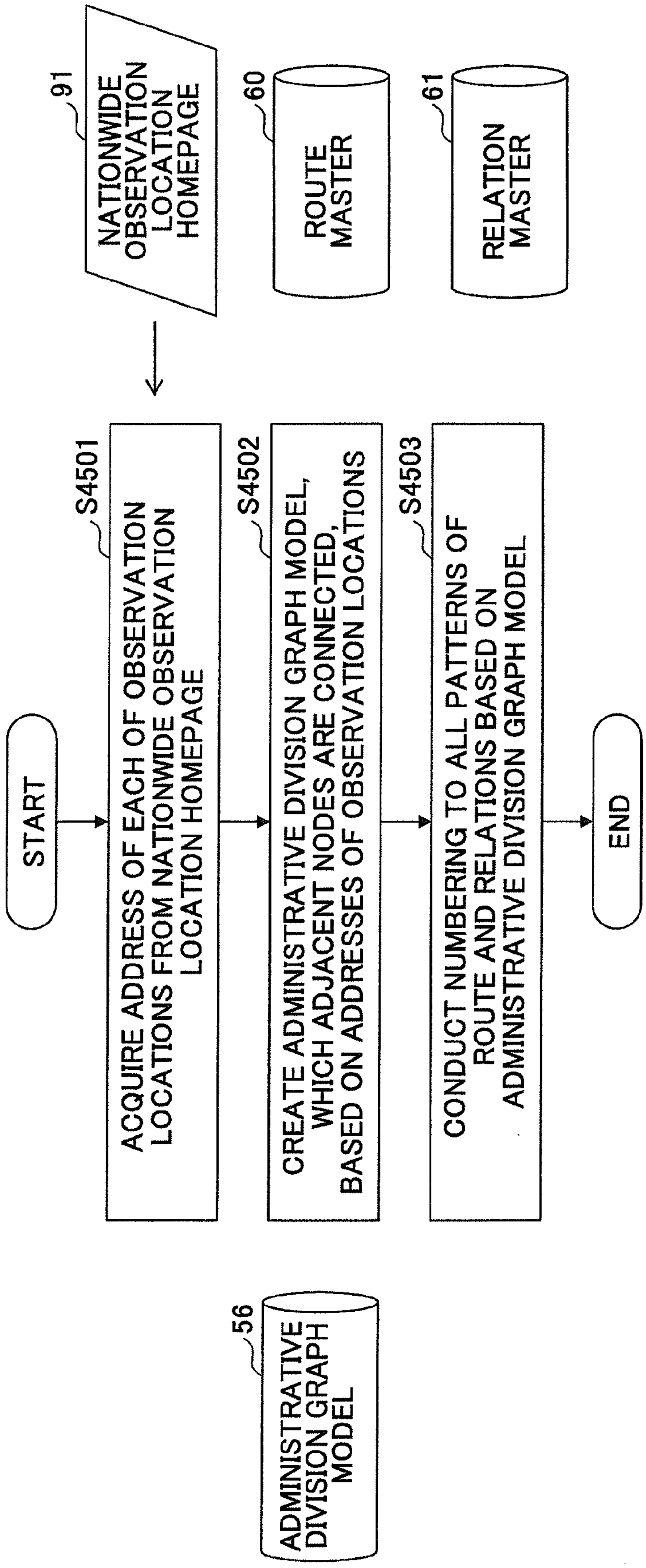
NATIONWIDE OBSERVATION LOCATION HOMEPAGE
91
ROUTE MASTER
60
RELATION MASTER
61
START
ACQUIRE ADDRESS OF EACH OF OBSERVATION LOCATIONS FROM NATIONWIDE OBSERVATION LOCATION HOMEPAGE
S4501
CREATE ADMINISTRATIVE DIVISION GRAPH MODEL, WHICH ADJACENT NODES ARE CONNECTED, BASED ON ADDRESSES OF OBSERVATION LOCATIONS
S4502
CONDUCT NUMBERING TO ALL PATTERNS OF ROUTE AND RELATIONS BASED ON ADMINISTRATIVE DIVISION GRAPH MODEL
S4503
END
ADMINISTRATIVE DIVISION GRAPH MODEL
56

FIG.19

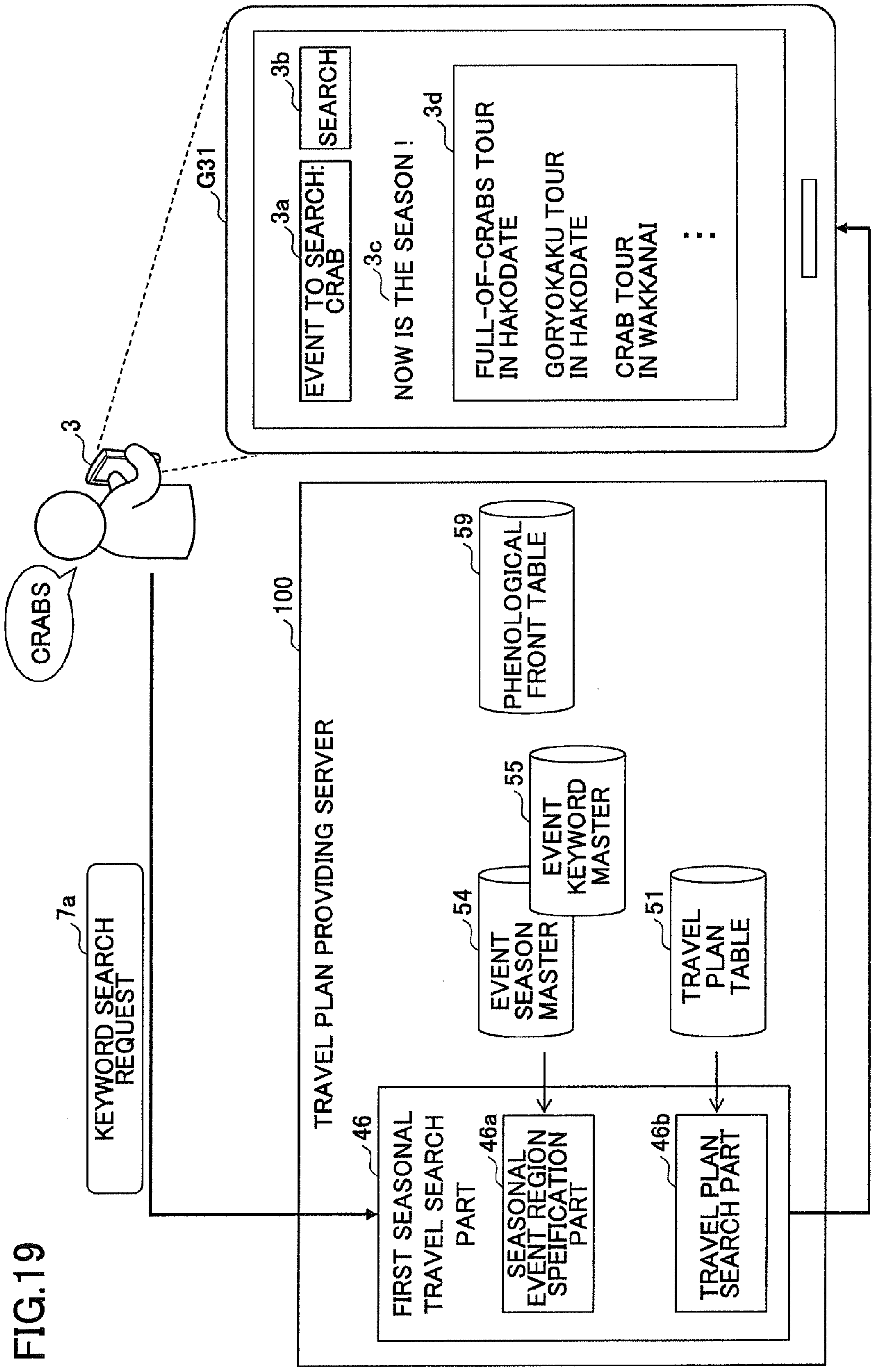
CRABS
3
G31
EVENT TO SEARCH: CRAB
3a
SEARCH
3b
NOW IS THE SEASON !
3c
3d
FULL-OF-CRABS TOUR IN HAKODATE
GORYOKAKU TOUR IN HAKODATE
CRAB TOUR IN WAKKANAI
...
KEYWORD SEARCH REQUEST
7a
TRAVEL PLAN PROVIDING SERVER
100
FIRST SEASONAL TRAVEL SEARCH PART
46
SEASONAL EVENT REGION SPEIFICATION PART
46a
TRAVEL PLAN SEARCH PART
46b
EVENT SEASON MASTER
54
EVENT KEYWORD MASTER
55
TRAVEL PLAN TABLE
51
PHENOLOGICAL FRONT TABLE
59

FIG.20

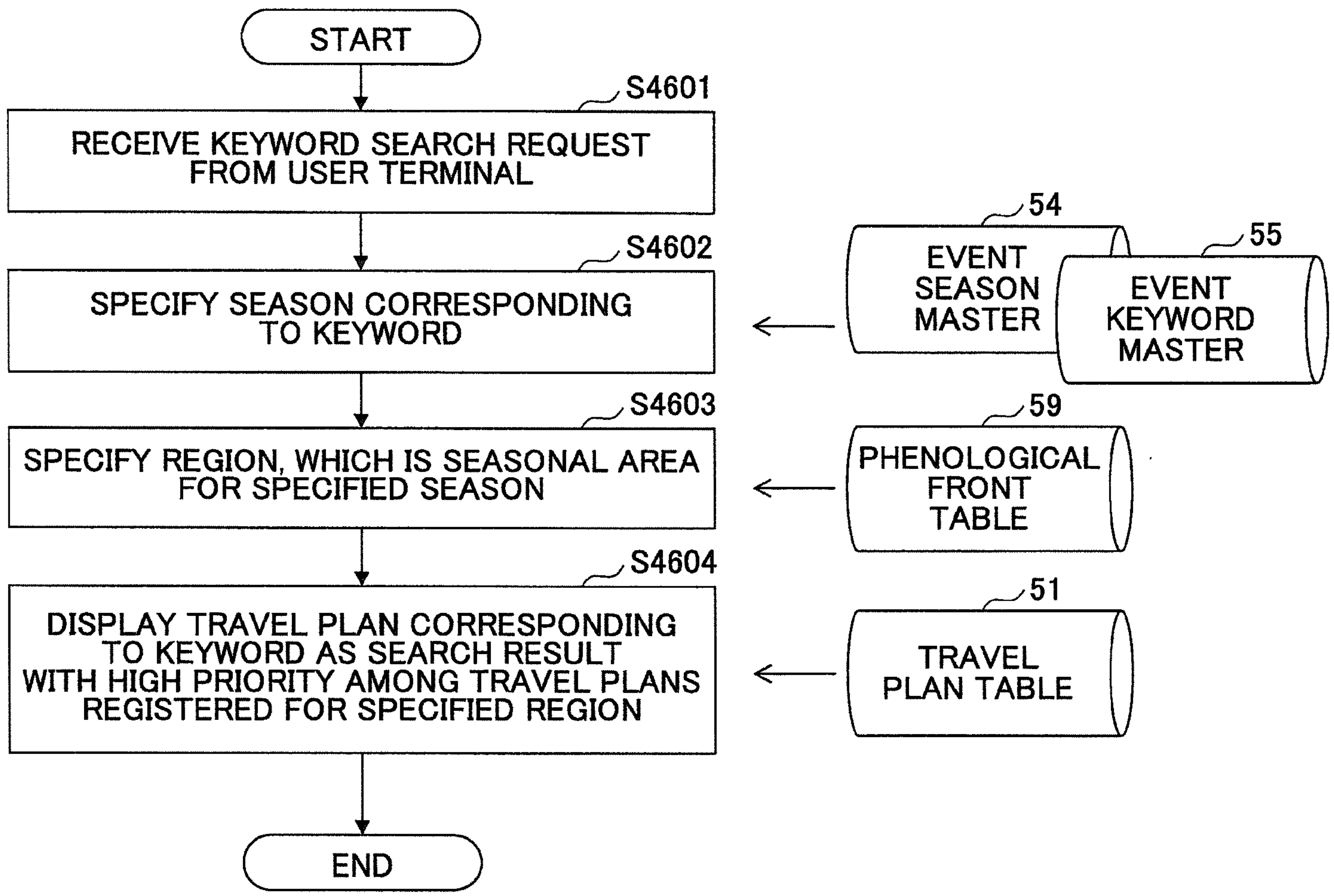
START
S4601
RECEIVE KEYWORD SEARCH REQUEST FROM USER TERMINAL
S4602
SPECIFY SEASON CORRESPONDING TO KEYWORD
S4603
SPECIFY REGION, WHICH IS SEASONAL AREA FOR SPECIFIED SEASON
S4604
DISPLAY TRAVEL PLAN CORRESPONDING TO KEYWORD AS SEARCH RESULT WITH HIGH PRIORITY AMONG TRAVEL PLANS REGISTERED FOR SPECIFIED REGION
END
54
EVENT SEASON MASTER
55
EVENT KEYWORD MASTER
59
PHENOLOGICAL FRONT TABLE
51
TRAVEL PLAN TABLE

FIG.21

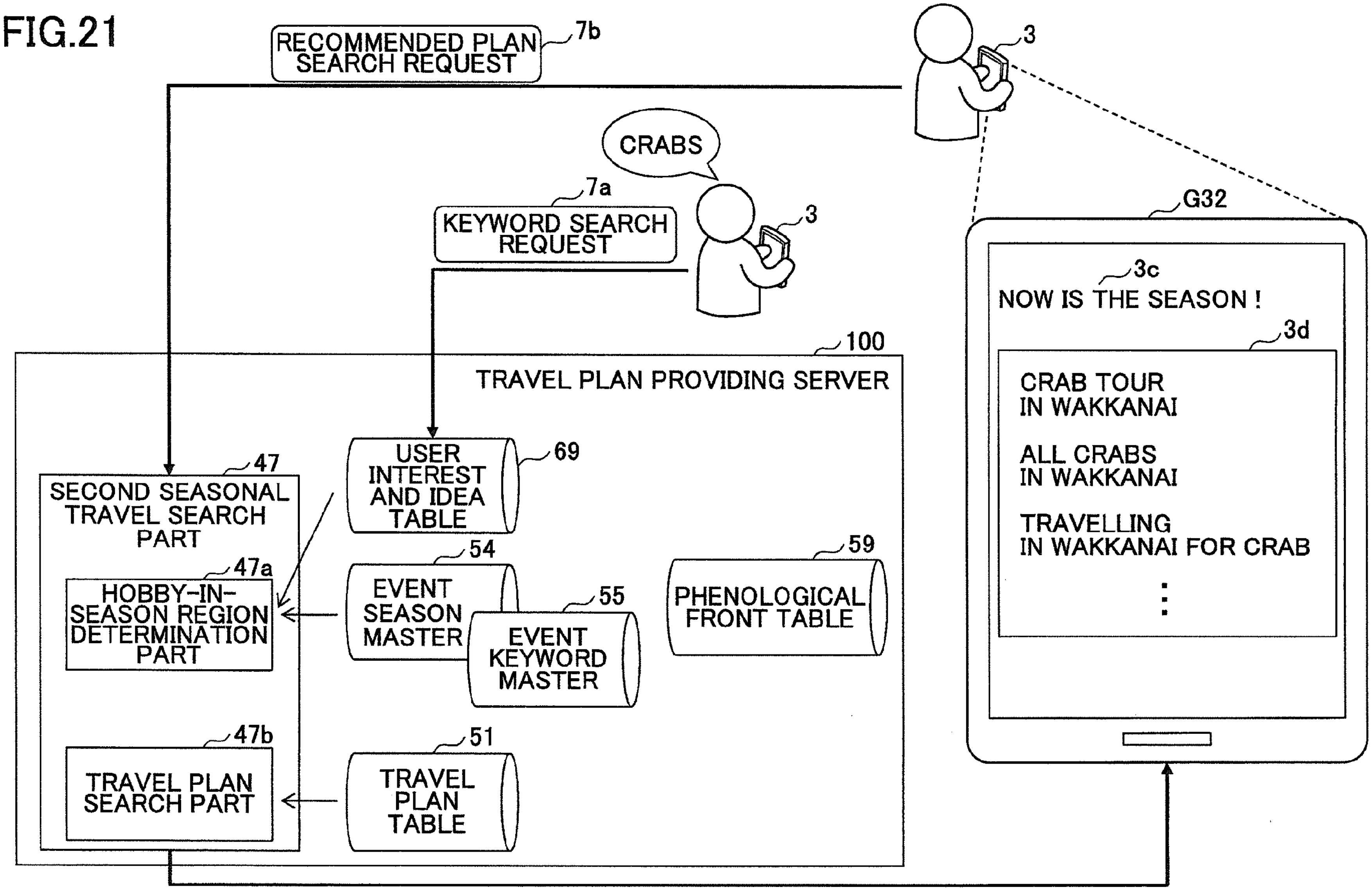
RECOMMENDED PLAN SEARCH REQUEST
7b
3
CRABS
7a
KEYWORD SEARCH REQUEST
3
G32
3c
NOW IS THE SEASON !
3d
CRAB TOUR IN WAKKANAI
ALL CRABS IN WAKKANAI
TRAVELLING IN WAKKANAI FOR CRAB
⋮
100
TRAVEL PLAN PROVIDING SERVER
47
SECOND SEASONAL TRAVEL SEARCH PART
47a
HOBBY-IN-SEASON REGION DETERMINATION PART
47b
TRAVEL PLAN SEARCH PART
69
USER INTEREST AND IDEA TABLE
54
EVENT SEASON MASTER
55
EVENT KEYWORD MASTER
59
PHENOLOGICAL FRONT TABLE
51
TRAVEL PLAN TABLE

FIG.22

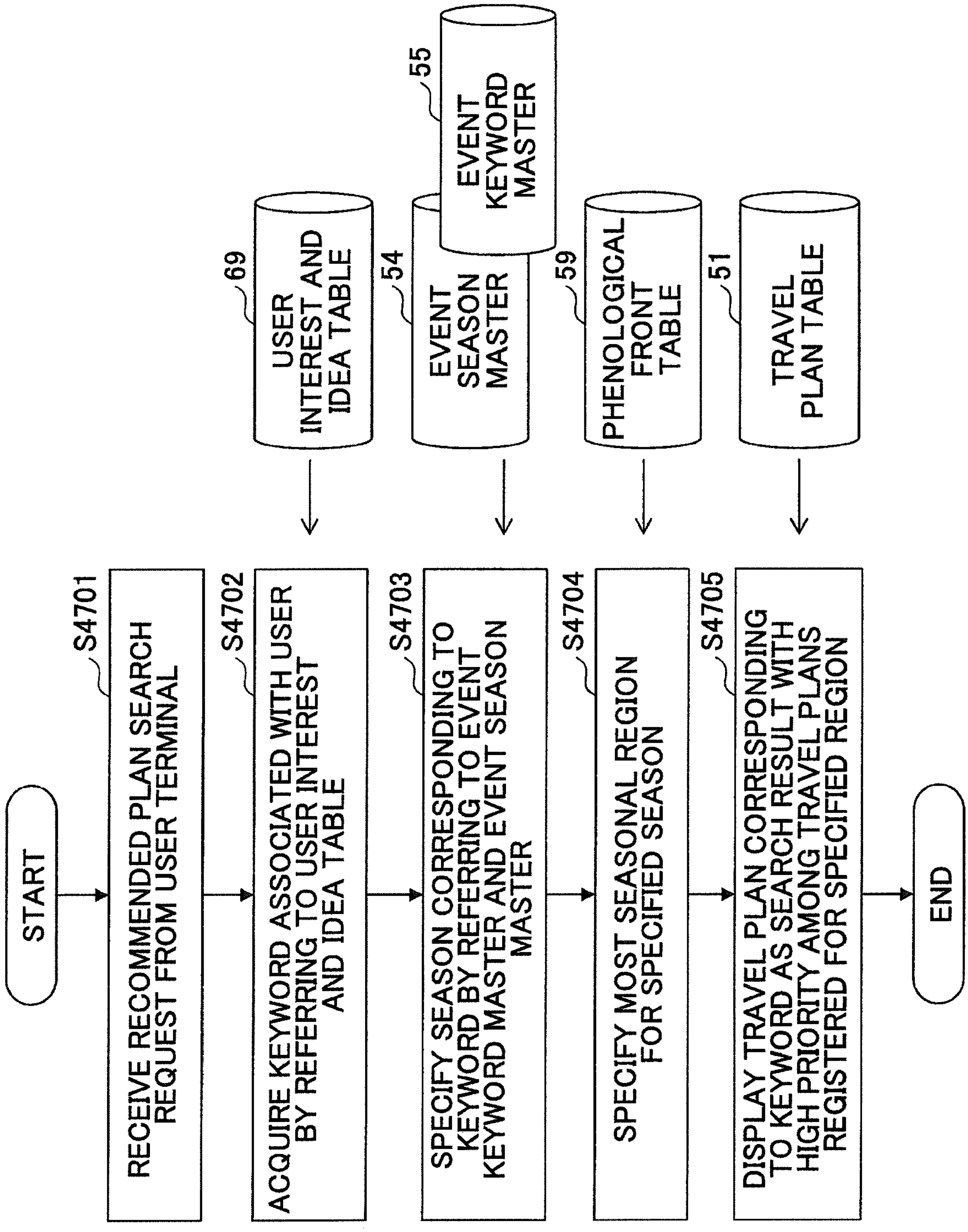
START
S4701
RECEIVE RECOMMENDED PLAN SEARCH REQUEST FROM USER TERMINAL
S4702
ACQUIRE KEYWORD ASSOCIATED WITH USER BY REFERRING TO USER INTEREST AND IDEA TABLE
69
USER INTEREST AND IDEA TABLE
S4703
SPECIFY SEASON CORRESPONDING TO KEYWORD BY REFERRING TO EVENT KEYWORD MASTER AND EVENT SEASON MASTER
54
EVENT SEASON MASTER
55
EVENT KEYWORD MASTER
S4704
SPECIFY MOST SEASONAL REGION FOR SPECIFIED SEASON
59
PHENOLOGICAL FRONT TABLE
S4705
DISPLAY TRAVEL PLAN CORRESPONDING TO KEYWORD AS SEARCH RESULT WITH HIGH PRIORITY AMONG TRAVEL PLANS REGISTERED FOR SPECIFIED REGION
51
TRAVEL PLAN TABLE
END

Europäisches Patentamt
European Patent Office
Office européen des brevets

# EUROPEAN SEARCH REPORT

Application Number
EP 17 16 0073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/347418 A1 (MASUKO SOH [JP]) 3 December 2015 (2015-12-03) * paragraphs [0043] - [0056]; figures * ----- | 1-8 | INV. G06Q10/06 |
| | | | TECHNICAL FIELDS SEARCHED (IPC) |
| | | | G06Q |

The present search report has been drawn up for all claims

1

| Place of search | Date of completion of the search | Examiner |
|---|---|---|
| Munich | 12 April 2017 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 17 16 0073

This annex lists the patent family members relating to the patent documents cited in the above-mentioned European search report. The members are as contained in the European Patent Office EDP file on The European Patent Office is in no way liable for these particulars which are merely given for the purpose of information.

12-04-2017

| Patent document cited in search report | Publication date | Patent family member(s) | Publication date |
|---|---|---|---|
| US 2015347418 A1 | 03-12-2015 | JP 5457612 B1 | 02-04-2014 |
| | | JP WO2014207912 A1 | 23-02-2017 |
| | | US 2015347418 A1 | 03-12-2015 |
| | | WO 2014207912 A1 | 31-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002304398 A
- JP 2010039710 A
- JP 2011065633 A
- JP 2015018545 A